# EUROPÄISCHE PATENTSCHRIFT

(11) **EP 3 963 217 B1**
(45) Veröffentlichungstag und Bekanntmachung des Hinweises auf die Patenterteilung: **13.07.2022**
(21) Anmeldenummer: 20719578.5
(22) Anmeldetag: 31.03.2020
(51) Int. Cl.: F16B 5/02, F16B 43/00, F16F 15/08, F16B 19/02, F16F 1/373, F16F 1/38

(54) **BEFESTIGUNGSANORDNUNG MIT DÄMPFUNGSWIRKUNG UND BAUTEILVERBINDUNG MIT DER BEFESTIGUNGSANORDNUNG**
FASTENING ARRANGEMENT WITH DAMPING EFFECT AND COMPONENT CONNECTION TO THE FASTENING ARRANGEMENT
ENSEMBLE DE FIXATION AYANT UNE ACTION D'AMORTISSEMENT ET RACCORDEMENT DE COMPOSANT À L'ENSEMBLE DE FIXATION

(30) Priorität: 29.04.2019 DE 102019111078
(43) Veröffentlichungstag der Anmeldung: 09.03.2022
(73) Patentinhaber: Böllhoff Verbindungstechnik GmbH, 33649 Bielefeld (DE)
(72) Erfinder: ARNDT, Andreas, 32689 Kalletal (DE); FUNKE, Thomas, 33397 Rietberg (DE); STEFFENFAUSEWEH, Sandra, 33415 Verl (DE); VORDERWISCH, Alexander, 33803 Steinhagen (DE); WITT, Dominik, 49080 Osnabrück (DE)
(74) Vertreter: HWP Intellectual Property
(86) Internationale Anmeldenummer: PCT/EP2020/059094
(87) Internationale Veröffentlichungsnummer: WO 2020/221537

(56) Entgegenhaltungen:
- DE-A1- 19 916 098
- US-A- 4 656 689
- US-A- 5 537 714
- US-A1- 2006 244 188

## Beschreibung

### 1. Gebiet der Erfindung

Die vorliegende Erfindung betrifft eine Befestigungsanordnung mit Dämpfungswirkung bestehend aus zwei baugleichen Befestigungseinheiten mit jeweils einer zentralen ersten Durchgangsöffnung, eine Befestigungseinheit der Befestigungsanordnung, ein erstes Bauteil mit der Befestigungsanordnung, eine Bauteilverbindung mittels der Befestigungsanordnung, ein Herstellungsverfahren einer Befestigungsanordnung sowie ein Verbindungsverfahren mittels der Befestigungsanordnung.

### 2. Hintergrund der Erfindung

Befestigungsanordnungen zur Befestigung von zwei Bauteilen aneinander, die eine Dämpfungswirkung aufweisen, sind im Stand der Technik allgemein bekannt. Solche Befestigungsanordnungen werden allgemein in einer Bauteilöffnung eines ersten Bauteils angeordnet und auf beiden Seiten der Bauteilöffnung gesichert. Eine durch die Befestigungsanordnung gesteckte Verbindungsschraube dient zur Befestigung des ersten Bauteils an einem zweiten Bauteil. Zur Befestigung der Befestigungsanordnung in der Bauteilöffnung des ersten Bauteils werden herkömmlicherweise zwei unterschiedlich ausgebildete Befestigungsvorrichtungen verwendet.

Eine Montagevorrichtung zum physischen Verbinden einer Vorrichtung oder eines elektrischen Paneels mit einer Montagestruktur ist beispielsweise in US 2012/0049425 A1 beschrieben. Die Montagevorrichtung bietet eine Stoß- und Kraftisolation. Die Montagevorrichtung umfasst einen inneren und einen äußeren Abschnitt, die mechanisch über flexible stoßabsorbierende Strukturen verbunden sind. Der äußere Teil der Montagevorrichtung ist über entfernbare Verbindungsmittel mechanisch mit einer Befestigungsstruktur verbunden. Eine Vorrichtung oder eine elektrische Platte ist über Befestigungsmittel an dem Mittelabschnitt der Montagevorrichtung befestigt.

US 2017/0207615 A1 betrifft eine Kabelführungsanordnung, die zur Unterstützung von Medienkabeln konfiguriert ist. Die Kabelführungsanordnung umfasst Befestigungsmerkmale/- strukturen, die so konfiguriert und dimensioniert sind, dass sie in Bezug auf eine Stützstruktur lösbar montiert werden können. Im Allgemeinen bietet die Kabelführungsanordnung eine glatte Oberfläche mit einer Biegeentlastung, durch die Faser- oder Kupferkabel durch die Seitenwand oder das Panel eines offenen Rahmen-Systems verlaufen. Die Kabelführungsanordnung kann ein erstes und ein zweites Führungselement umfassen, die aneinander und an einer ersten Seite einer Seitenwand eines offenen Gestells montiert sind, um eine halbierte ringartige Struktur zu bilden.

Eine Befestigungsvorrichtung zur Befestigung einer Entkopplungsvorrichtung bezüglich eines Lochrands einer Lochausnehmung eines Abschirmteils ist in DE 10 2016 106 152 A1 beschrieben. Die Entkopplungsvorrichtung zur schwingungsentkoppelnden Verbindung einer Hülse mit dem Abschirmteil besitzt zumindest ein Überbrückungselement, welches an seinem radialen Außenrand Verbindungsmittel zum befestigenden Verbinden des Überbrückungselements mit dem Lochrand des Abschirmteils aufweist. Die Verbindungsmittel umfassen mindestens vier Laschen, die vom Überbrückungselement radial nach außen abgehen. Eine Teilmenge von mindestens zwei Laschen des Überbrückungselements sind zur Anlage an einer ersten Außenseite des Abschirmteils und eine verbleibende Restmenge von mindestens zwei Laschen sind zur Anlage an einer gegenüberliegenden zweiten Außenseite des Abschirmteils vorgesehen. Der Lochrand mit den Laschen der Teilmenge und den Laschen der Restmenge ist mit einem Klemmsitz bezüglich der Entkopplungsvorrichtung festlegbar.

DE 60 2004 002 062 T2 beschreibt ein vibrationsgeschütztes Hitzeschild. Das Hitzeschild ist dergestalt an einer Vibrationsquelle befestigt, dass es zumindest einen Teil einer Hitzequelle abdeckt. Zudem bildet es einen Spalt in Bezug auf eine Oberfläche der besagten Hitzequelle aus, um eine Hitzestrahlung von der Hitzequelle zu verringern. Das Hitzeschild umfasst einen vibrationsgeschützten Hitzeschild-Hauptkörper-Abschnitt, ein Kragen-Glied, angeordnet an einem offenen Loch des vibrationsgeschützten Hitzeschild-Hauptkörper-Abschnitts und versehen mit einem Paar von Verschluss-Elementen, befestigt durch einen Bolzen an der Hitzequelle. Weiterhin umfasst es eine Unterlegscheibe, bei der ein Bereich, angeordnet zwischen einem Paar der Verschlusselemente des Kragen-Glieds, mit näherungsweise C-förmigem Querschnitt ausgeformt ist sowie ein Verbindungs-Glied, das die Unterlegscheibe und den vibrationsgeschützten Hitzeschild-Hauptkörper verbindet.

Ein Kabelverbinder, der sowohl automatisch versiegelt als auch eine Zugentlastung bereitstellt, wenn ein Draht eingeführt wird, ist in US 2007/0026735 A1 beschrieben. Der Kabelverbinder umfasst einen Drahtdurchgang durch eine biegbare Hülle, die sowohl den durch den Durchgang eingeführten Draht als auch die Wandöffnung, in der der Stecker befestigt ist, abdichtet. Ein steiferes Skelett stützt diese Hülle und ist mit Anhängern versehen, die es ermöglichen, den Draht durch den Durchgang hindurchzuführen, die jedoch jegliches Entfernen des Drahtes vom Durchgang blockieren.

EP 2 105 617 A2 beschreibt eine zweiteilige Befestigungsanordnung für ein Flächenelement, die sich aus einem Basiselement und einem Kopplungselement zusammensetzt. Das Basiselement ist zweiseitig ausgebildet mit einer Befestigungsfläche an seiner ersten Seite und einem von seiner zweiten Seite vorstehenden Verbindungszapfen, mit dem eine Schnappverbindung zum Kopplungselement herstellbar ist. Das Kopplungselement ist ebenfalls zweiseitig ausgebildet mit einer Befestigungsfläche an seiner ersten Seite und einer Zapfenaufnahme für den Verbindungszapfen des Basiselements an seiner zweiten Seite, während das Kopplungselement eine Öffnung aufweist, in der die Zapfenaufnahme federnd angeordnet ist.

Eine Dichtungshülse aus Kunststoff zur Verwendung an Metallbolzen im Wandaufbau zum Schutz von Drähten, Kabeln, Leitungen und dergleichen ist in US 5,537,714 A beschrieben. Die Dichtungshülse umfasst einen zylindrischen Körper mit einem vergrößerten Flansch an einem Ende mit radial vorstehenden Federschnallen an der Außenseite des Körpers, wodurch die Dichtungshülse in ein Loch in der Größe des Stegs eingesetzt werden kann, wobei die Lochkante zwischen den Rastnasen und dem Flansch eingeschlossen ist. Auf der anderen Seite des Flansches befinden sich diametral gegenüberliegende axial vorstehende Federfinger. Der Flansch weist auch zwei diametral gegenüberliegende Löcher auf, wobei die Finger und Löcher so positioniert sind, dass zwei Dichtungshülsen durch axiales Drehen gegeneinander Flansch an Flansch miteinander verbunden werden können.

US 4,656,689 A betrifft ebenfalls eine Dichtungshülse, um eine Leitung zu schützen, die durch eine Wandöffnung hindurchgeht, und um eine Luftdichtung zwischen der Leitung und dem Rand der Wand um die Wandöffnung herum vorzusehen. Die Dichtungshülse hat einen relativ steifen Befestigungsabschnitt mit Vorsprüngen, die sich davon erstrecken, und Verriegelungsvorrichtungen an den Enden der Vorsprünge, um die Ränder der Wand um die Wandöffnung herum zu ergreifen. Ein elastomerer Dichtungsabschnitt nimmt die Vorsprünge auf und hat eine Öffnung mit kleineren Abmessungen als die Außenabmessungen der Leitung.

Ein Verfahren zum Ausbilden eines Durchgangslochs durch eine Verbundstruktur mit einer Vielzahl von inneren Kammern ist in US 8,409,395 B2 beschrieben. Ein Einfügungsring ist mit der Verbundstruktur verbunden, um eine Schutzschicht um den Umfang einer Durchdringung zu schaffen, die in der Verbundstruktur ausgebildet ist. Ein Klebstoff ist zwischen der Verbundstruktur und dem Einsatzring angeordnet, um eine fluiddichte Dichtung zwischen dem Einsatzring und den inneren Kammern zu schaffen. In dieser Hinsicht mildert die fluiddichte Dichtung den Fluidstrom zwischen den inneren Kammern.

Schließlich beschreibt DE 10 2017 122 236 A1 ein Befestigungssystem zur Befestigung eines Bauteils an einem Trägerbauteil. Das Befestigungssystem umfasst einen durch eine Durchgangsöffnung des Bauteils steckbaren und in einer Befestigungsbohrung des Trägerbauteils befestigbaren Befestigungsbolzen sowie eine äußere Hülse und eine in einer Durchgangsöffnung der äußeren Hülse axial beweglich gelagerte innere Hülse, wobei die innere Hülse eine Durchgangsöffnung für den Befestigungsbolzen bildet, in der der Befestigungsbolzen axial beweglich gelagert ist. Weiterhin umfasst das Befestigungssystem eine auf die äußere Hülse aufsteckbare erste Federscheibe, die dazu ausgebildet ist, sich im an dem Trägerbauteil befestigten Zustand an eine erste Seite des Bauteils anzulegen, und eine ebenfalls auf die äußere Hülse aufsteckbare zweite Federscheibe, die dazu ausgebildet ist, sich im an dem Trägerbauteil befestigten Zustand an eine der ersten Seite gegenüberliegende zweite Seite des Bauteils anzulegen.

Das Dokument DE 199 16 098 A1 zeigt eine weitere Befestigungsanordnung nach dem Stand der Technik.

Ein Nachteil dieser bekannten Anordnungen ist der Montage- und Herstellungsaufwand sowie die fehlende Dämpfungswirkung sowohl für axiale wie auch radiale Schwingungen.

Ausgehend von diesen bekannten Befestigungsanordnungen ist es daher eine Aufgabe der vorliegenden Erfindung, eine verbesserte Befestigungsanordnung mit Dämpfungswirkung bereitzustellen, die werkzeuglos befestigbar und bei unterschiedlichen Materialstärken einsetzbar sein soll. Ebenso ist es eine Aufgabe der vorliegenden Erfindung, ein vereinfachtes Herstellungsverfahren für eine solche Befestigungsanordnung bereitzustellen.

### 3. Zusammenfassung der Erfindung

Die obige Aufgabe wird gelöst durch eine Befestigungsanordnung mit Dämpfungswirkung bestehend aus zwei baugleichen Befestigungseinheiten mit jeweils einer zentralen ersten Durchgangsöffnung gemäß dem unabhängigen Patentanspruch 1, eine Befestigungseinheit der Befestigungsanordnung gemäß dem unabhängigen Patentanspruch 9, ein erstes Bauteil mit der

Befestigungsanordnung gemäß dem Patentanspruch 11, eine Bauteilverbindung mittels der Befestigungsanordnung gemäß dem Patentanspruch 12, ein Herstellungsverfahren einer Befestigungsanordnung gemäß dem unabhängigen Patentanspruch 14 sowie ein Verbindungsverfahren mittels der Befestigungsanordnung gemäß dem unabhängigen Patentanspruch 18. Vorteilhafte Ausführungsformen und Weiterentwicklungen ergeben sich aus der nachfolgenden Beschreibung, den Zeichnungen sowie den anhängigen Patentansprüchen.

Eine erfindungsgemäße Befestigungsanordnung mit Dämpfungswirkung besteht aus zwei baugleichen Befestigungseinheiten mit jeweils einer zentralen ersten Durchgangsöffnung. Jede Befestigungseinheit umfasst ein Montageelement und ein Dämpfungselement. Das Montageelement ist scheibenförmig mit einer zentralen zweiten Durchgangsöffnung ausgebildet und von einer ersten Seite jedes Montageelements erstreckt sich eine identische Raststruktur. Das Dämpfungselement ist scheibenförmig mit einer zentralen dritten Durchgangsöffnung ausgebildet und zumindest teilweise in der zentralen zweiten Durchgangsöffnung des Montageelements angeordnet. Die zwei Befestigungseinheiten sind über die einander zugewandten ersten Seiten mit der identischen Raststruktur der jeweiligen Montageelemente mit dazwischen angeordnetem erstem Bauteil aneinander befestigbar.

Nachfolgend wird der Einsatz der erfindungsgemäßen Befestigungsanordnung zum besseren Verständnis der Erfindung erläutert. Ein Hauptmerkmal der vorliegenden Erfindung ist dabei, dass die Befestigungsanordnung aus zwei baugleichen Befestigungseinheiten besteht. Dies spiegelt sich auch darin wieder, dass die Raststrukturen auf der ersten Seite jedes Montageelements identisch ausgebildet sind. Zur Lageorientierung wird eine Längsachse der Befestigungsanordnung durch die ersten Durchgangsöffnungen der baugleichen Befestigungseinheiten definiert. Mit anderen Worten verläuft eine Einsetzrichtung eines Verbindungselements, wie beispielsweise einer Verbindungsschraube oder eines Bolzens, durch die ersten Durchgangsöffnungen der baugleichen Befestigungseinheiten entlang der Längsachse der Befestigungsanordnung und somit auch jeder Befestigungseinheit.

Bei Verwendung werden zunächst die zwei baugleichen Befestigungseinheiten bereitgestellt, die in einer Öffnung eines ersten Bauteils, beispielsweise einer Öffnung in einem Montageflansch einer schwingungserzeugenden Pumpe, befestigt werden sollen. Eine beispielhafte Bauteildicke des ersten Bauteils im Bereich der Öffnung liegt zwischen 1 und 3 mm. In einem ersten Schritt wird eine der Befestigungseinheiten in der Öffnung des ersten Bauteils angeordnet. Die Dimensionierung der Öffnung im ersten Bauteil ist dabei so, dass sich die Raststruktur, die sich vorzugsweise benachbart zur zweiten Durchgangsöffnung von der ersten Seite des Montageelements erstreckt, in die Öffnung im ersten Bauteil erstreckt. Ein Außendurchmesser des Montageelements ist wiederum so groß gewählt, dass das Montageelement an dem ersten Bauteil benachbart zur ersten Öffnung anliegt. Die so gebildete Anlagefläche definiert eine Anlageebene am ersten Bauteil, die rechtwinklig zur Längsachse der Befestigungsanordnung ausgerichtet ist. In einer Ausgestaltung ist die Anlagefläche kontinuierlich ausgebildet. In einer alternativen Ausgestaltung ist die Anlagefläche partiell ausgebildet, beispielsweise mit Durchbrüchen oder Ähnlichem.

Nachdem eine der zwei baugleichen Befestigungseinheiten mit sich in die Öffnung im ersten Bauteil erstreckender Raststruktur an der ersten Bauteilseite angeordnet wurde, wird die andere der zwei Befestigungseinheiten auf der gegenüberliegenden zweiten Bauteilseite in analoger Weise angeordnet. Da beide Befestigungseinheiten baugleich ausgebildet sind und mit einander zugewandten ersten Seiten der Montageelemente, d.h. mit den einander zugewandten identischen Raststrukturen, in die Bauteilöffnung des ersten Bauteils eingesetzt werden, müssen die Befestigungseinheiten bezogen aufeinander um einen Winkel um die Längsachse der Befestigungsanordnung gedreht werden. Auf diese Weise stehen die identischen Raststrukturen der jeweiligen Montageelemente der entsprechenden Befestigungseinheiten im Bereich der Öffnung des ersten Bauteils miteinander in Eingriff, während das erste Bauteil benachbart zur Öffnung im ersten Bauteil zwischen den Befestigungseinheiten und insbesondere zwischen den Montageelementen angeordnet ist. Dieser Aufbau wird später insbesondere mit Bezug auf die bevorzugten Ausführungsformen deutlich.

Nach der so erfolgten Vormontage der Befestigungsanordnung wird ein zweites Bauteil bereitgestellt. Dies erfolgt an derselben Produktionsstelle oder an einer anderen Produktionsstelle, in Abhängigkeit von dem gewünschten Verfahrensablauf. Auch dies wird später im Detail erläutert.

Eine Öffnung des zweiten Bauteils wird mit den zentralen ersten Durchgangsöffnungen der Befestigungseinheiten ausgerichtet. Anschließend wird ein Verbindungselement, wie beispielsweise eine Verbindungsschraube oder ein Bolzen, durch die zentralen ersten Durchgangsöffnungen geführt und in einem Befestigungsbereich befestigt, der im oder benachbart zum zweiten Bauteil bereitgestellt ist. Die Befestigung erfolgt dabei vorzugsweise so, dass eine Kompression des jeweiligen Dämpfungselements der Befestigungseinheiten eine Dämpfungswirkung sowohl für axiale wie auch radiale Schwingungen bereitstellt. Hierbei ist zu beachten, dass das Montageelement neben der Montagefunktion auch eine Schutzfunktion für das Dämpfungselement bereitstellt, insbesondere vor abrasivem Verschleiß. Eine Materialwahl für das Dämpfungselement muss dabei so erfolgen, dass einerseits eine ausreichende Dämpfungswirkung bereitgestellt während andererseits gleichzeitig eine erforderliche Verbindungsstabilität sichergestellt wird. Hierzu eignet sich insbesondere ein thermoplastisches Elastomer.

Ein Vorteil dieser Vorgehensweise ist, dass der Herstellungsaufwand aufgrund der Verwendung von baugleichen Befestigungseinheiten reduziert ist. Zudem muss ein Werker bei der Montage nicht auf eine richtige Zuordnung der Befestigungseinheiten achten. Dies reduziert daher auch die Gefahr einer fehlerhaften Montage. Zudem ist ein automatisierter Einbau vereinfacht, da die Befestigungseinheiten lediglich relativ zueinander um die Längsachse gedreht werden müssen, damit die identischen Raststrukturen miteinander in Eingriff gebracht werden können.

In einer bevorzugten Ausführungsform der Befestigungsanordnung mit Dämpfungswirkung erstreckt sich die Raststruktur rechtwinklig zu der durch die Scheibenform des Montageelements definierten Anlageebene am ersten Bauteil. Besonders bevorzugt ist die Raststruktur dabei benachbart zur zentralen zweiten Durchgangsöffnung angeordnet. Auf diese Weise ist der gegenseitige Eingriff der Raststrukturen der Montageelemente bei zusammengesetzter Befestigungsanordnung besonders effektiv gewährleistet. Bezogen auf die Scheibenform des Montageelements kann der Bereich benachbart der zentralen zweiten Durchgangsöffnung daher auch als Montagebereich und der radial weiter außen liegende Bereich auf der ersten Seite als Anlagebereich am ersten Bauteil betrachtet werden. Somit stellt das Montageelement einerseits sicher, dass die jeweilige Befestigungseinheit nicht insgesamt durch die Öffnung im ersten Bauteil passt, sondern im Randbereich der Öffnung anliegt. Andererseits erfolgt eine sichere Montage der Befestigungsanordnung in der Bauteilöffnung des ersten Bauteils alleine über die identischen Raststrukturen der zwei Montageelemente der zwei Befestigungseinheiten aneinander.

Vorteilhafterweise umfasst jede Befestigungseinheit weiterhin eine Hülse, die in der zentralen dritten Durchgangsöffnung des Dämpfungselements angeordnet ist. Auf diese Weise kann eine Materialwahl für das Dämpfungselement stärker auf die Dämpfungswirkung ausgerichtet sein, da die dadurch reduzierte Stabilität der Befestigungseinheit durch die stabilisierende Wirkung der Hülse ausgleichbar ist. Die Hülse ist vorzugsweise aus Metall oder einem thermoplastischen Material gebildet. Weiterhin bevorzugt liegen im Verwendungszustand der Befestigungsanordnung die Hülsen der jeweiligen Befestigungseinheiten aneinander an. Ein Vorteil dieses Aufbaus wird ebenfalls später deutlich.

In einer weiteren bevorzugten Ausführungsform der Befestigungsanordnung ist die Hülse mittels Presssitz in der zentralen dritten Durchgangsöffnung des Dämpfungselements angeordnet. Dies wird insbesondere dadurch realisiert, dass ein Außendurchmesser der Hülse größer ist als ein Innendurchmesser der zentralen dritten Durchgangsöffnung des Dämpfungselements. Auf diese Weise ist sichergestellt, dass die Bestandteile Montageelement, Dämpfungselement und Hülse der jeweiligen Befestigungseinheit verlier-sicher aneinander befestigt sind. Die Verarbeitung der jeweiligen Befestigungseinheiten ist somit erleichtert und ein automatisiertes Verarbeiten wird besonders unterstützt. Alternativ hierzu sind an der radialen Innenseite des Dämpfungselements Rippen vorgesehen, so dass die Hülse partiell geklemmt wird.

Vorteilhafterweise weist jedes Dämpfungselement eine Shore A Härte zwischen 40 und 80 Shore A und/oder eine Mehrzahl an Aussparungen an einer ersten Seite auf, wobei die Raststruktur des Montageelements und die Aussparungen des dazugehörigen Dämpfungselements auf der gleichen Seite der jeweiligen Befestigungseinheit bereitgestellt sind. Diese bevorzugte Ausgestaltung bewirkt, dass das Dämpfungselement auf das jeweilige Einsatzgebiet abgestimmte Dämpfungseigenschaften aufweist. Die Befestigungseinheiten der Befestigungsanordnung sind daher ideal an das gewünschte Einsatzfeld anpassbar.

Weiterhin ist es vorteilhaft, dass jedes Montageelement als Raststruktur eine Mehrzahl an Rastnasen aufweist, die im montierten Zustand der Befestigungsanordnung mit an einer entsprechenden Mehrzahl an Rastflächen am Montageelement in Eingriff stehen. Die jeweiligen Rastflächen können durch gesonderte Bereiche bereitgestellt werden, die in Montagerichtung der Montageelemente aneinander einen Hinterschnitt bereitstellen. Alternativ stellen die Rastnasen des einen Montageelements Rastflächen für das andere Montageelement bereit. Beide Alternativen werden nachfolgend verdeutlicht.

Gemäß einer ersten Alternative einer bevorzugten Ausführungsform sind die Rastnasen radial nach außen ausgerichtet. Besonders bevorzugt und beispielhaft weist jedes Montageelement vier nach außen gerichtete Rastnasen und vier davon getrennte Rastflächen auf, die jeweils zu zweit gruppiert und auf radial gegenüberliegenden Seiten angeordnet sind. Mit anderen Worten sind jeweils zwei Rastnasen unmittelbar benachbart zueinander angeordnet und bilden somit ein Paar Rastnasen. Das erste Paar Rastnasen ist radial auf der gegenüberliegenden Seite im Hinblick auf das zweite Paar Rastnasen angeordnet. Anders ausgedrückt ist die geometrische Mitte eines Rastnasenpaares um 180° von der geometrischen Mitte des anderen Rastnasenpaares beabstandet. Diese Anordnung gilt analog für die Rastflächen. Da die Rastnasenpaare im Wechsel mit den Rastflächen angeordnet sind, ist eine geometrische Mitte eines Rastnasenpaares um 90° von der geometrischen Mitte eines Paares an Rastflächen beabstandet. Vorzugsweise erfolgt daher eine Befestigung der Befestigungseinheiten aneinander, indem die Montageelemente der zwei baugleichen Befestigungseinheiten relativ zueinander um 90° um die Längsachse der Befestigungsanordnung gedreht werden und anschließend entlang der Längsachse aufeinander zu bewegt werden, bis die Rastnasen mit den Rastflächen verrasten. Vorzugsweise ist die Anzahl der so gruppierten Rastnasen abhängig vom Durchmesser des Montageelements, insbesondere nimmt die Anzahl der gruppierten Rastnasen mit zunehmendem Durchmesser ebenfalls zu. In diesem Zusammenhang ist es ebenfalls bevorzugt, dass die gruppierten Rastnasen gleichmäßig voneinander beabstandet sind, so dass der Winkel zwischen den jeweiligen Rastnasenpaaren oder -gruppen gleich ist.

In einer bevorzugten Ausführungsform dieser Alternative weist jedes Montageelement zwei Führungsstege und zwei Aussparungen auf der radialen Innenseite auf, die jeweils radial einander gegenüber liegend und im Wechsel angeordnet sind. Insbesondere ist ein Führungssteg mittig zwischen einem Paar Rastnasen angeordnet. Folglich ist die Aussparung für den jeweiligen Führungssteg um 90° versetzt dazu mittig zwischen einem Paar Rastflächen angeordnet. Mittels der Führungsstege und der dazugehörigen Aussparungen wird der Zusammenbau weiter erleichtert und eine Verdrehsicherung gebildet, so dass die zwei Montageelemente im aneinander befestigten Zustand nicht oder nur geringfügig relativ zueinander gedreht werden können.

Weiterhin ist es in dieser Alternative vorteilhaft, dass jedes Montageelement radial außen zwei Vertiefungen aufweist. Mittels der radial außen angeordneten Vertiefung ist die Ausrichtung der Montageelemente zueinander leicht erkennbar, was einerseits die Montage durch den Werker wie auch eine automatisierte Verarbeitung unterstützt.

Gemäß einer zweiten Alternative einer bevorzugten Ausführungsform sind die Rastnasen jedes Montageelements auf einer gemeinsamen Kreislinie ausgerichtet und benachbarte Rastnasen weisen entlang der Kreislinie in entgegengesetzte Richtungen. Mit anderen Worten sind die Rastnasen so angeordnet, dass die Rastvorsprünge nicht radial nach außen oder innen zeigen. Vielmehr bilden zwei Rastnasen, die mit dem Rücken, d.h. der dem Rastvorsprung gegenüberliegenden Seite, einander zugewandt sind, ein Paar Rastnasen. Beispielsweise sind sechs solcher Rastnasenpaare vorhanden, die gleichmäßig voneinander beabstandet sind. Aufgrund dieses Aufbaus bilden die Rastvorsprünge der Rastnasen des einen Montageelements zugleich die Rastflächen für die Rastvorsprünge der Rastnasen des anderen Montageelements. Bezogen auf das Beispiel mit den sechs Rastnasenpaaren müssen die zwei Montageelement um 30° relativ zueinander um die Längsachse der Befestigungsanordnung zur Montage der Montageelemente gedreht werden, bevor sie entlang der Längsachse zur Verrastung miteinander aufeinander zu bewegt werden können. Es ist daher ebenfalls bevorzugt, dass die Montageelemente jeder Befestigungseinheiten zur Befestigung aneinander um 30° zueinander um die Längsachse gedreht werden. Somit steht die Rastnase eines Rastnasenpaares eines Montageelements mit einer Rastnase eines Rastnasenpaares des anderen Montageelements in Eingriff. Die andere Rastnase des Rastnasenpaares des Montageelements steht mit einer Rastnase eines benachbarten Rastnasenpaares des anderen Montageelements in Eingriff. Diese Anordnung stellt eine besonders verlässliche Befestigung der Montageelemente aneinander bereit.

In einer weiteren bevorzugten Ausführungsform dieser zweiten Alternative umfasst jedes Montageelement zwischen jeder Gruppe Rastnasen radial außen eine Aussparung, in der ein entsprechender erster Vorsprung des Dämpfungselements angeordnet ist. Insbesondere die radial außen und auf der ersten Seite des Dämpfungselements angeordneten ersten Vorsprünge des Dämpfungselements stellen eine Orientierungshilfe bei der Montage der Befestigungseinheiten aneinander bereit.

Vorteilhafterweise weist in der Ausführungsform gemäß der zweiten Alternative jedes Dämpfungselement auf der ersten Seite radial innen eine Vielzahl an zweiten Vorsprüngen in Übereinstimmung mit einem Paar Rastnasen auf. Dieser Aufbau stellt eine weitere Verdrehsicherung der Befestigungseinheiten zueinander bereit und erleichtert den korrekten Zusammenbau.

In einer ebenso bevorzugten Ausführungsform der zweiten Alternative ist die Hülse jeder Befestigungseinheit zweiteilig ausgebildet. Mittels dieses Aufbaus sind die Dämpfungseigenschaften der jeweiligen Befestigungseinheit weiter verbessert. Alternativ hierzu ist die Hülse mit einer Mehrzahl an Durchbrüchen versehen, durch die das Material des Dämpfungselements radial nach innen vorsteht. Auf diese Weise ist der Innendurchmesser der Befestigungseinheit an dieser Stelle verringert, wodurch das Befestigungselement verlier-sicher darin anordenbar ist.

Eine erfindungsgemäße Befestigungseinheit für eine erfindungsgemäße Befestigungsanordnung mit einer zentralen ersten Durchgangsöffnung umfasst ein Montageelement sowie ein Dämpfungselement. Das Montageelement ist scheibenförmig mit einer zentralen zweiten Durchgangsöffnung ausgebildet und von einer ersten Seite des Montageelements erstreckt sich eine Raststruktur. Das Dämpfungselement ist scheibenförmig mit einer zentralen dritten Durchgangsöffnung ausgebildet und zumindest teilweise in der zentralen zweiten Durchgangsöffnung des Montageelements angeordnet. Zwei baugleiche erfindungsgemäße Befestigungseinheiten ergeben somit die erfindungsgemäße Befestigungsanordnung. Daher wird im Hinblick auf die sich ergebenden Vorteile auf die obigen Ausführungen verwiesen.

In einer bevorzugten Ausführungsform der Befestigungseinheit umfasst diese weiterhin eine Hülse, die in der zentralen dritten Durchgangsöffnung des Dämpfungselements angeordnet ist. Auch bezüglich dieser bevorzugten Ausführungsform wird auf die entsprechenden Erläuterungen zur Befestigungsanordnung verwiesen.

Ein erfindungsgemäßes erstes Bauteil weist eine in einer Bauteilöffnung des ersten Bauteils angeordnete erfindungsgemäße Befestigungsanordnung auf. Bei dem ersten Bauteil handelt es sich beispielsweise um eine Pumpe, wie eine Vakuumpumpe, wobei die Befestigungsanordnung in einer Öffnung eines Montageflanschs vormontiert ist. Eine Materialstärke des ersten Bauteils benachbart zur Bauteilöffnung beträgt vorzugsweise zwischen 1 und 3 mm. Bezüglich der resultierenden technischen Effekte und Vorteile wird ebenfalls auf die obigen Ausführungen verwiesen.

Eine erfindungsgemäße Bauteilverbindung umfasst ein erfindungsgemäßes erstes Bauteil sowie ein zweites Bauteil mit einer zweiten Öffnung und ein Verbindungselement, wobei das Verbindungselement sich durch die Befestigungsanordnung erstreckt und mit einem passenden Befestigungsbereich im oder benachbart zum zweiten Bauteil in Eingriff steht. Dieser Aufbau verdeutlicht, dass mit der erfindungsgemäßen Befestigungsanordnung eine lösbare Befestigung, wie beispielsweise eine Verschraubung, realisierbar ist, wobei in einer besonders bevorzugten Ausführungsform insbesondere die Hülsen der Befestigungseinheiten im fest verbundenen Zustand der beiden Bauteile aneinander anliegen, so dass eine Blockverschraubung realisierbar ist. Daraus folgt, dass eine Länge oder axiale Erstreckung der Hülsen in Längsrichtung der Befestigungsanordnung vorzugsweise geringer ist als eine axiale Erstreckung der Dämpfungselemente in Längsrichtung der Befestigungsanordnung. Auch im Hinblick auf die erfindungsgemäße Bauteilverbindung wird auf die obigen Erläuterungen zur erfindungsgemäßen Befestigungsanordnung verwiesen.

In einer bevorzugten Ausführungsform der Bauteilverbindung ist ein radialer Toleranzausgleich während des Herstellens der Bauteilverbindung dadurch realisierbar, dass jedes Dämpfungselement, vorzugsweise jede Hülse, einen Innendurchmesser aufweist, der größer ist als der Außendurchmesser des Verbindungselements. Dies erleichtert insbesondere die Befestigung der beiden Bauteile aneinander, sei es durch einen Werker oder automatisch.

Ein erfindungsgemäßes Herstellungsverfahren einer erfindungsgemäßen Befestigungsanordnung umfasst die Schritte: Bereitstellen eines Montageelements, Bereitstellen eines Dämpfungselements, Anordnen des Dämpfungselements zumindest teilweise im Montageelement und Wiederholen der Schritte des Bereitstellens eines Montageelements, des Bereitstellens eines Dämpfungselements und des Anordnens des Dämpfungselements zumindest teilweise im Montageelement, um eine weitere baugleiche Befestigungseinheit bereitzustellen, deren Montageelement eine identische Raststruktur aufweist, so dass zwei baugleiche Befestigungseinheiten der Befestigungsanordnung aneinander befestigbar sind durch einander zugewandtes Anordnen der ersten Seiten der jeweiligen Montageelemente mit einem dazwischen angeordnetem ersten Bauteil. Wie anhand der obigen Schritte erkennbar ist, wird mit dem erfindungsgemäßen Herstellungsverfahren die erfindungsgemäße Befestigungsanordnung bereitgestellt. Zur Vermeidung von Wiederholungen wird daher auf die obigen Erläuterungen zur erfindungsgemäßen Befestigungsanordnung verwiesen.

In einer bevorzugten Ausführungsform des Herstellungsverfahrens umfasst dieses den weiteren Schritt des Bereitstellens einer Hülse und des Anordnens der Hülse im Dämpfungselement. Auch bezüglich dieser Ausführungsform wird auf die obige Diskussion der entsprechend ausgestalteten Befestigungsanordnung verwiesen.

In einer bevorzugten Ausführungsform des Herstellungsverfahrens besteht die Hülse aus einem Metall oder einem Thermoplast und/oder das Montageelement besteht aus einem technischen Thermoplast. Insbesondere besteht die Hülse aus einem elektrisch leitenden Material, besonders bevorzugt aus einem elektrisch leitenden Thermoplast mit oder ohne Faserverstärkung. Über die Wahl des jeweiligen Materials ist die Befestigungsanordnung an das gewünschte Einsatzgebiet angepasst. Dabei erfüllt das Montageelement neben der Montagefunktion auch eine Schutzfunktion für das zumindest teilweise darin angeordnete Dämpfungselement, indem es einen Schutz vor abrasivem Verschleiß bereitstellt.

In einer weiteren bevorzugten Ausführungsform des Herstellungsverfahrens erfolgt das Bereitstellen des Montageelements durch Spritzgießen des Montageelements und/oder das Bereitstellen des Dämpfungselements erfolgt durch Anordnen der Hülse im Montageelement und Spritzgießen des Dämpfungselements aus einem Material mit einer Shore A Härte zwischen 40 und 80 Shore A. Mittels dieses Vorgehens sind unterschiedliche Herstellungsweisen abgedeckt. Einerseits können das Montageelement und das Dämpfungselement getrennt voneinander spritzgegossen und dann ineinander eingesetzt werden. Dabei ist vorzugsweise die Hülse bereits in das Dämpfungselement eingesetzt oder wird beim Spritzgießen des Dämpfungselements davon umspritzt. In diesem Zusammenhang ist es alternativ bevorzugt, dass das Dämpfungselement anstelle des Spritzgießens mittels Vulkanisation hergestellt wird. Alternativ wird zunächst das Montageelement mittels Spritzguss hergestellt. Dann wird in das hergestellte Montageelement die Hülse eingesetzt, beide Bestandteile in einer weiteren Spritzgussform angeordnet und das Dämpfungselement mittels Spritzguss hergestellt. Auf diese Weise wird das Dämpfungselement direkt an der richtigen Position im Montageelement mittels Spritzgießen hergestellt, so dass das separate Anordnen des Dämpfungselements im Montageelement entfällt. Dies vereinfacht das Herstellungsverfahren weiterhin. In diesem Zusammenhang ist es besonders vorteilhaft, wenn die Hülse eine Mehrzahl an Durchbrüchen aufweist. Auf diese Weise kann das Befestigungselement verlier-sicher in einer der zwei die Befestigungsanordnung bildenden Befestigungseinheiten angeordnet werden, wie oben erläutert.

Ein erfindungsgemäßes Verbindungsverfahren eines ersten Bauteils mit einem zweiten Bauteil umfasst die Schritte: Bereitstellen eines ersten Bauteils mit darin angeordneter Befestigungsanordnung, insbesondere eines erfindungsgemäßen ersten Bauteils, oder Bereitstellen eines ersten Bauteils und einer erfindungsgemäßen Befestigungsanordnung sowie Anordnen der erfindungsgemäßen Befestigungsanordnung in einer Öffnung des ersten Bauteils, danach Anordnen eines zweiten Bauteils mit einer zweiten Bauteilöffnung in Ausrichtung mit der ersten Bauteilöffnung und Einsetzen des Verbindungselements, so dass das Außengewinde des Verbindungselements mit einem passenden Befestigungsbereich im oder benachbart zum zweiten Bauteil in Eingriff steht. Mit dem erfindungsgemäßen Verbindungsverfahren ist somit die erfindungsgemäße Bauteilverbindung herstellbar. Bezüglich der sich ergebenden technischen Effekte und Vorteile verweisen wir daher auf die obigen Ausführungen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine erste perspektivische Ansicht einer ersten Ausführungsform einer Befestigungseinheit einer erfindungsgemäßen Befestigungsanordnung von unten,
- Figur 2: eine zweite perspektivische Ansicht der ersten Ausführungsform der Befestigungseinheit der erfindungsgemäßen Befestigungsanordnung von unten,
- Figur 3: eine dritte perspektivische Ansicht der ersten Ausführungsform der Befestigungseinheit der erfindungsgemäßen Befestigungsanordnung von oben,
- Figur 4: eine perspektivische Ansicht der ersten Ausführungsform der erfindungsgemäßen Befestigungsanordnung von der Seite in einer Bauteilverbindung mit unterschiedlichen Plattenstärken,
- Figur 5: eine seitliche Explosionsansicht der ersten Ausführungsform der erfindungsgemäßen Befestigungsanordnung in einer Bauteilverbindung,
- Figur 6: eine Schnittansicht der ersten Ausführungsform der erfindungsgemäßen Befestigungsanordnung in einer Bauteilverbindung,
- Figur 7: eine perspektivische Explosionsansicht der ersten Ausführungsform der erfindungsgemäßen Befestigungsanordnung in einer Bauteilverbindung,
- Figur 8: eine seitliche Explosionsansicht einer zweiten Ausführungsform der erfindungsgemäßen Befestigungsanordnung in einer Bauteilverbindung,
- Figur 9: eine erste perspektivische Ansicht einer zweiten Ausführungsform einer Befestigungseinheit einer erfindungsgemäßen Befestigungsanordnung von unten,
- Figur 10: eine zweite perspektivische Ansicht der zweiten Ausführungsform der Befestigungseinheit der erfindungsgemäßen Befestigungsanordnung von unten,
- Figur 11: einen schematischen Verfahrensablauf einer ersten Ausführungsform eines Herstellungsverfahren der Befestigungsanordnung,
- Figur 12: einen schematischen Verfahrensablauf einer zweiten Ausführungsform eines Herstellungsverfahren der Befestigungsanordnung und
- Figur 13: einen schematischen Verfahrensablauf einer Ausführungsform eines Verbindungsverfahrens mit der Befestigungsanordnung.

### 5. Detaillierte Beschreibung der bevorzugten Ausführungsformen

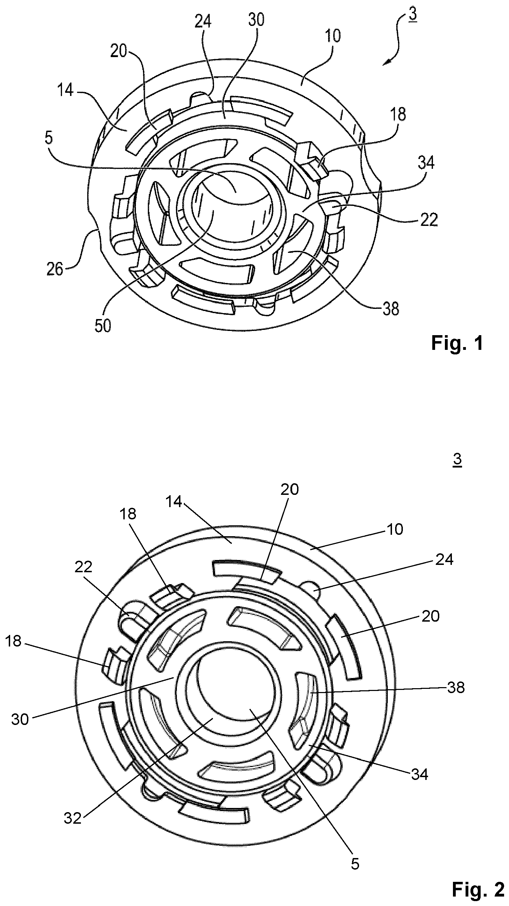

Unter Bezugnahme auf die Figuren 1 bis 3 wird zunächst eine erste Ausführungsform einer erfindungsgemäßen Befestigungseinheit 3 diskutiert. Generell ist hierbei festzuhalten, dass zwei baugleiche Befestigungseinheiten 3 gemäß dieser ersten Ausführungsform eine erste Ausführungsform einer erfindungsgemäßen Befestigungsanordnung 1 mit Dämpfungswirkung bilden.

Die Befestigungseinheit 3 weist eine zentrale erste Durchgangsöffnung 5 auf und umfasst allgemein ein Montageelement 10, ein Dämpfungselement 30 und eine Hülse 50. Als Material für die Hülse 50 wird ein Metall oder ein Thermoplast verwendet. Vorzugsweise handelt es sich bei dem Material um ein elektrisch leitendes Material, beispielsweise ein thermoplastisches Material mit elektrisch leitenden Eigenschaften sowie mit oder ohne Faserverstärkung. Da die Hülsen 50 der zwei die Befestigungsanordnung 1 bildenden Befestigungseinheiten 3 bei der späteren Verwendung aneinander anliegen, erfolgt die Materialwahl so, dass die Hülse 50 die entstehenden Kräfte aufnehmen und weiterleiten kann. Das Montageelement 10 ist vorzugsweise aus einem technischen Thermoplast, wie beispielsweise einem Polyamid, gebildet. Neben der später deutlich werdenden Befestigungsfunktion stellt es eine Schutzfunktion für das Dämpfungselement 30 gegen abrasiven Verschleiß bereit. Das Dämpfungselement 30 wiederum stellt die Dämpfungsfunktion der Befestigungsanordnung 1 bereit und ist aus einem Elastomer oder einem thermoplastischen Elastomer gebildet, das eine Shore A Härte zwischen 40 und 80 Shore A aufweist. Mittels der entsprechenden Materialwahl kann die Befestigungseinheit 3 und somit die Befestigungsanordnung 1 insgesamt an das gewünschte Einsatzgebiet angepasst werden. Mögliche Einsatzgebiete liegen in einem Temperaturbereich zwischen -40 °C und 200 °C.

Das Montageelement 10 ist scheibenförmig mit einer zentralen zweiten Durchgangsöffnung 12 ausgebildet. Aufgrund der Scheibenform weist das Montageelement 10 eine erste Seite 14 und eine gegenüberliegende zweite Seite 16 auf. Von der ersten Seite 14 des Montageelements 10, die bei Verwendung zumindest teilweise benachbart zu einer Öffnung im ersten Bauteil A am ersten Bauteil A anliegt, erstreckt sich eine Raststruktur. Bezogen auf die Scheibenform des Montageelements 10 handelt es sich bei dem Bereich benachbart zur zentralen zweiten Durchgangsöffnung 12 um einen Montagebereich und der radial weiter außen liegende Bereich auf der ersten Seite 14 fungiert als Anlagebereich am ersten Bauteil. Somit stellt das Montageelement 10 bei Verwendung einerseits sicher, dass die jeweilige Befestigungseinheit 3 nicht durch die Öffnung im ersten Bauteil A passt sondern im Randbereich der Öffnung anliegt. Andererseits erfolgt eine sichere Montage der Befestigungsanordnung 1 in der Bauteilöffnung des ersten Bauteils A alleine über die identischen Raststrukturen der zwei Montageelemente 10 der zwei Befestigungseinheiten 3 aneinander.

Die Raststruktur besteht im dargestellten Beispiel aus einer Mehrzahl an Rastnasen 18, die im montierten Zustand der Befestigungsanordnung 1 mit einer entsprechenden Mehrzahl an Rastflächen 20 am baugleichen Montageelement 10 in Eingriff stehen. Im dargestellten Beispiel wird die Raststruktur durch vier Rastnasen 18 sowie vier Rastflächen 20 gebildet, wobei die Rastflächen 20 durch gesonderte Bereiche bereitgestellt werden, die in Montagerichtung der baugleichen Montageelemente 10 aneinander einen Hinterschnitt bereitstellen. Dies wird später bei der Diskussion der Verwendung oder Montage der Befestigungsanordnung 1 mit den zwei baugleichen Befestigungseinheiten 3 deutlich.

Die Raststruktur erstreckt sich rechtwinklig zu der durch die Scheibenform des Montageelements 10 definierten Anlageebene am ersten Bauteil A. Weiterhin ist die Raststruktur benachbart zur zentralen zweiten Durchgangsöffnung 12 angeordnet. Wie später detailliert erläutert, wird auf diese Weise der gegenseitige Eingriff der Raststrukturen der Montageelemente 10 bei zusammengesetzter Befestigungsanordnung 1 besonders effektiv gewährleistet.

Die Rastnasen 18 gemäß der dargestellten Ausführungsform sind radial nach außen ausgerichtet. Diese vier nach außen gerichteten Rastnasen 18 und die vier davon getrennten Rastflächen 20 sind jeweils zu zweit gruppiert und auf radial gegenüberliegenden Seiten angeordnet sind. Mit anderen Worten sind jeweils zwei Rastnasen 18 unmittelbar benachbart zueinander angeordnet und bilden somit ein Paar Rastnasen. Das erste Paar Rastnasen 18 ist radial auf der gegenüberliegenden Seite im Hinblick auf das zweite Paar Rastnasen 18 angeordnet. Die geometrische Mitte eines Rastnasenpaares ist daher um 180° von der geometrischen Mitte des anderen Rastnasenpaares beabstandet. Diese Anordnung gilt analog für die Rastflächen 20. Da die Rastnasenpaare im Wechsel mit den Rastflächenpaaren angeordnet sind, ist eine geometrische Mitte eines Rastnasenpaares um 90° von der geometrischen Mitte eines Paares an Rastflächen 20 beabstandet. Eine Befestigung der baugleichen Befestigungseinheiten 3 aneinander erfolgt, indem die Montageelemente 10 jeder Befestigungseinheit 3 relativ zueinander um 90° um die Längsachse der Befestigungsanordnung 1 gedreht werden.

Weiterhin weist das Montageelement 10 zwei Führungsstege 22 und zwei Aussparungen 24 auf der radialen Innenseite auf, die radial einander gegenüber liegend und im Wechsel angeordnet sind. Dabei ist ein Führungssteg 22 mittig zwischen einem Paar Rastnasen 18 angeordnet. Folglich ist die Aussparung 24 für den jeweiligen Führungssteg 22 um 90° versetzt dazu mittig zwischen einem Paar Rastflächen 20 angeordnet. Mittels der Führungsstege 22 und der dazugehörigen Aussparungen 24 wird eine Verdrehsicherung gebildet, so dass zwei Montageelemente 10 im aneinander befestigten Zustand nicht oder nur geringfügig relativ zueinander gedreht werden können.

Schließlich weist jedes Montageelement 10 radial außen zwei Vertiefungen 26 auf. Im dargestellten Beispiel liegen die Positionen der Vertiefungen 26 auf einer Linie mit den Positionen der Führungsstege 22. Auf diese Weise ist die Ausrichtung der Montageelemente 10 zueinander leicht erkennbar, was einerseits die Montage durch den Werker wie auch eine automatisierte Verarbeitung unterstützt.

Das Dämpfungselement 30 ist scheibenförmig mit einer zentralen dritten Durchgangsöffnung 32 ausgebildet. Auch das Dämpfungselement 30 verfügt über eine erste Seite 34, die bei Verwendung benachbart zum ersten Bauteil A angeordnet ist, sowie eine gegenüberliegende zweite Seite 36. Das Dämpfungselement 30 ist zumindest teilweise in der zentralen zweiten Durchgangsöffnung 12 des Montageelements 10 angeordnet.

In der dargestellten Ausführungsform weist das Dämpfungselement 30 eine Mehrzahl an Aussparungen 38 an der ersten Seite 34 auf. Somit sind die Raststruktur des Montageelements 10 und die Aussparungen 38 des Dämpfungselements 30 auf der gleichen Seite der jeweiligen Befestigungseinheit 3 bereitgestellt sind. Eine entsprechende Gestaltung der Aussparungen 38 insbesondere in Verbindung mit der Materialwahl für das Dämpfungselement 30 bewirkt, dass das Dämpfungselement 30 auf das jeweilige Einsatzgebiet abgestimmte Dämpfungseigenschaften aufweist. Die zweite Seite 36 des Dämpfungselements 30 ist, bis auf die zentrale dritte Durchgangsöffnung 32, geschlossen ausgebildet. Im dargestellten Ausführungsbeispiel ist die zweite Seite 36 konvex gestaltet. Besonders bevorzugt ist die zweite Seite 36 des Dämpfungselements 30 kegelförmig oder kegelstumpfförmig ausgebildet sein. Ebenso kann das Dämpfungselement 30 insgesamt kegelförmig oder kegelstumpfförmig ausgebildet sein.

Die Hülse 50 als drittes Bauteil der Befestigungseinheit 3 ist in der zentralen dritten Durchgangsöffnung 32 des Dämpfungselements 30 angeordnet. Die Anordnung der Hülse 30 in der dritten Durchgangsöffnung 32 erfolgt insbesondere mittels Presssitz. Dies wird dadurch realisiert, dass ein Außendurchmesser der Hülse 50 größer ist als ein Innendurchmesser der zentralen dritten Durchgangsöffnung 32 des Dämpfungselements 30. Auf diese Weise ist sichergestellt, dass die Bestandteile Montageelement 10, Dämpfungselement 30 und Hülse 50 der Befestigungseinheit 3 verlier-sicher aneinander befestigt sind. Dies erleichtert die Verarbeitung der jeweiligen Befestigungseinheit 3 und gestattet auch ein automatisiertes Verarbeiten. Zudem ist eine axiale Erstreckung der Hülse 50 in Längsrichtung der Befestigungsanordnung 1 geringer als eine axiale Erstreckung des Dämpfungselements 30 in Längsrichtung der Befestigungsanordnung 1. Auf diese Weise ist bei einer späteren Blockverschraubung, bei der die Hülsen der baugleichen Befestigungseinheiten 3 aneinander anliegen, eine Kompression des Dämpfungselements 30 in Längsrichtung der Befestigungsanordnung 1 realisierbar.

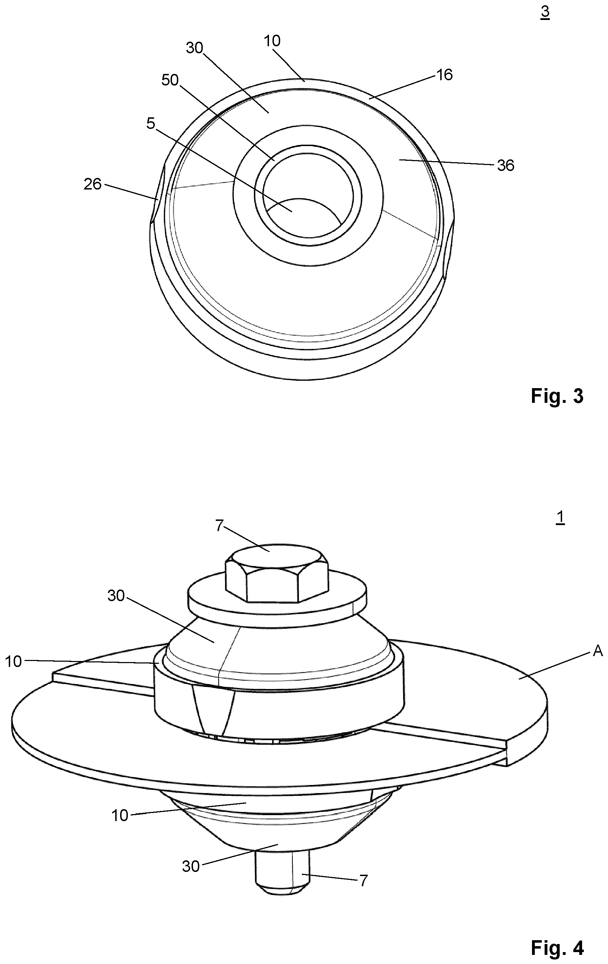

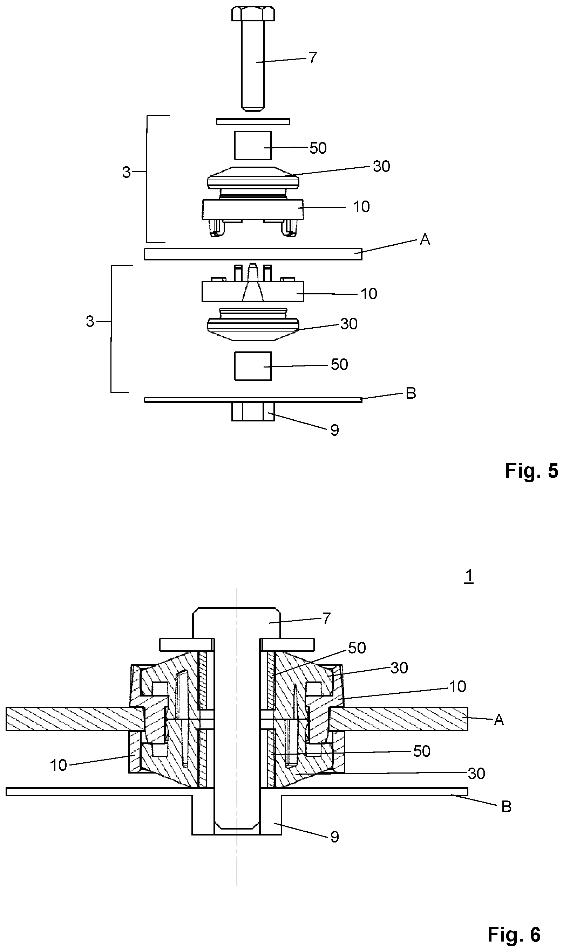

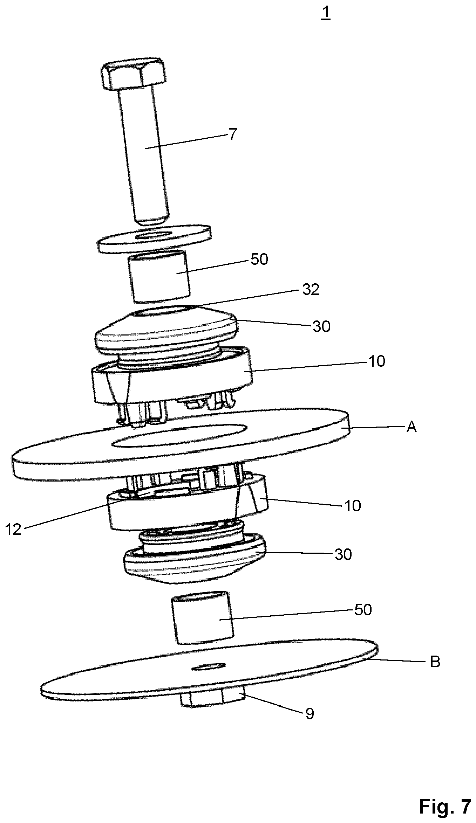

Zwei baugleiche Befestigungseinheiten 3 bilden eine Befestigungsanordnung 1. Aufgrund der Baugleichheit sind die Raststrukturen auf der ersten Seite 14 jedes Montageelements 10 identisch ausgebildet. Eine Längsachse der Befestigungsanordnung 1 wird dabei durch die ersten Durchgangsöffnungen 5 definiert. Mit anderen Worten verläuft eine Einsetzrichtung einer Verbindungsschraube 7 als beispielhaftes Verbindungselement durch die Durchgangsöffnung 5 entlang der Längsachse der Befestigungsanordnung 1 und somit auch jeder Befestigungseinheit 3. Der Zusammenbau und die entsprechende Funktionsweise werden nachfolgend unter Bezugnahme auf die Figuren 4 bis 7 erläutert.

Bei Verwendung werden zunächst zwei baugleiche Befestigungseinheiten 3 bereitgestellt, die in einer Öffnung eines ersten Bauteils A, beispielsweise einem Montageflansch einer schwingungserzeugenden Pumpe, befestigt werden sollen. Eine Materialstärke des ersten Bauteils benachbart zur Bauteilöffnung beträgt vorzugsweise zwischen 1 und 3 mm. In einem ersten Schritt wird eine der Befestigungseinheiten 3 benachbart zur Öffnung des ersten Bauteils A angeordnet. Die Dimensionierung der Öffnung im ersten Bauteil A ist dabei so, dass sich die Raststruktur in die Öffnung im ersten Bauteil A erstreckt. Im vorliegenden Beispiel erstrecken sich daher die Rastnasen 18 sowie die Führungsstege 22 in die Öffnung im ersten Bauteil A.

Der Außendurchmesser des Montageelements 10 ist wiederum so gewählt, dass das Montageelement 10 an dem ersten Bauteil A benachbart zur ersten Öffnung anliegt. Die so gebildete Anlagefläche definiert eine Anlageebene am ersten Bauteil A, die rechtwinklig zur Längsachse der Befestigungsanordnung 1 ist.

Nachdem eine der zwei baugleichen Befestigungseinheiten 3 mit sich in die Öffnung im ersten Bauteil A erstreckender Raststruktur an einer ersten Bauteilseite angeordnet wurde, wird die andere der zwei baugleichen Befestigungseinheiten 3 auf einer gegenüberliegenden zweiten Bauteilseite in analoger Weise angeordnet. Da beide Befestigungseinheiten 3 baugleich ausgebildet sind und mit einander zugewandten ersten Seiten der Montageelement 10, d.h. mit den einander zugewandten identischen Raststrukturen, in die Bauteilöffnung des ersten Bauteils A eingesetzt werden, müssen die Befestigungseinheiten 3 bezogen aufeinander um einen Winkel um die Längsachse der Befestigungsanordnung 1 gedreht werden. Im dargestellten Beispiel ist eine relative Drehung der beiden Befestigungseinheiten 3 zueinander um 90° erforderlich. In dieser Position gelangen bei einem Bewegen der Befestigungseinheiten 3 entlang der Längsachse aufeinander zu die Rastnasen 18 des Montageelements 10 der einen Befestigungseinheit 3 mit den Rastflächen 20 des Montageelements 10 der anderen Befestigungseinheit 3 in Eingriff. Zudem greifen die Führungsstege 22 des Montageelements 10 der einen Befestigungseinheit in die dafür vorgesehene Aussparung 24 am Montageelement 10 der anderen Befestigungseinheit ein. Auf diese Weise stehen die identischen Raststrukturen der jeweiligen Montageelemente 10 der entsprechenden Befestigungseinheiten 3 miteinander in Eingriff, während das erste Bauteil A zwischen den Befestigungseinheiten 3 und insbesondere zwischen den Montageelementen 10 angeordnet ist.

Nach der so erfolgten Vormontage der Befestigungsanordnung 1 wird ein zweites Bauteil B bereitgestellt. Dies erfolgt an derselben Produktionsstelle oder an einer anderen Produktionsstelle, in Abhängigkeit von dem gewünschten Verfahrensablauf.

Eine Öffnung des zweiten Bauteils B wird mit der zentralen ersten Durchgangsöffnung 5 der Befestigungseinheiten 3 ausgerichtet. Anschließend wird eine Verbindungsschraube 7 als Verbindungselement durch die zentralen ersten Durchgangsöffnungen 5 geführt und mit einem Befestigungsbereich 9 für die Verbindungsschraube 7 in Eingriff gebracht, der beispielsweise ein Innengewinde aufweist und im oder benachbart zum zweiten Bauteil B bereitgestellt ist. Ein radialer Toleranzausgleich ist dabei dadurch realisierbar, dass jede Hülse 50 einen Innendurchmesser aufweist, der größer ist als der Außendurchmesser der Verbindungsschraube 7. Dies erleichtert insbesondere die Befestigung der beiden Bauteile A, B aneinander, sei es durch einen Werker oder automatisch.

Eine beispielhafte Verschraubung erfolgt so, dass die Hülsen 50 der jeweiligen Befestigungseinheiten 3 aneinander anliegen (nicht dargestellt) und eine Kompression des jeweiligen Dämpfungselements der Befestigungseinheiten 3 eine Dämpfungswirkung sowohl für axiale wie auch radiale Schwingungen bereitstellt. Hierbei ist zu beachten, dass das Montageelement 10, wie eingangs erläutert, neben der Montagefunktion auch eine Schutzfunktion für das Dämpfungselement 30 bereitstellt, insbesondere einen Schutz vor abrasivem Verschleiß. Dieser Aufbau verdeutlicht, dass mit der Befestigungsanordnung 1 eine lösbare Verschraubung realisierbar ist, wobei insbesondere die Hülsen 50 der Befestigungseinheiten 3 im fest verbundenen Zustand der beiden Bauteile A, B aneinander anliegen, so dass eine Blockverschraubung vorhanden ist.

Ein Vorteil dieser Vorgehensweise ist, dass der Herstellungsaufwand aufgrund der Verwendung von zwei baugleichen Befestigungseinheiten 3 reduziert ist. Zudem muss ein Werker bei der Montage nicht auf eine richtige Zuordnung der Befestigungseinheiten 3 achten. Dies reduziert daher auch die Gefahr einer fehlerhaften Montage. Zudem ist die Möglichkeit des automatisierten Einbaus gegeben, da die Befestigungseinheiten 3 lediglich relativ zueinander um die Längsachse gedreht werden müssen, damit die identischen Raststrukturen anschließend miteinander in Eingriff gebracht werden können. Im Ergebnis sind die zwei Befestigungseinheiten 3 somit über die einander zugewandten ersten Seiten 14 mit der identischen Raststruktur der jeweiligen Montageelemente 10 mit dazwischen angeordnetem erstem Bauteil A aneinander befestigbar. In diesem Zustand liegt somit ein erstes Bauteil A mit einer vormontierten Befestigungsanordnung 1 in einer Bauteilöffnung des ersten Bauteils A vor.

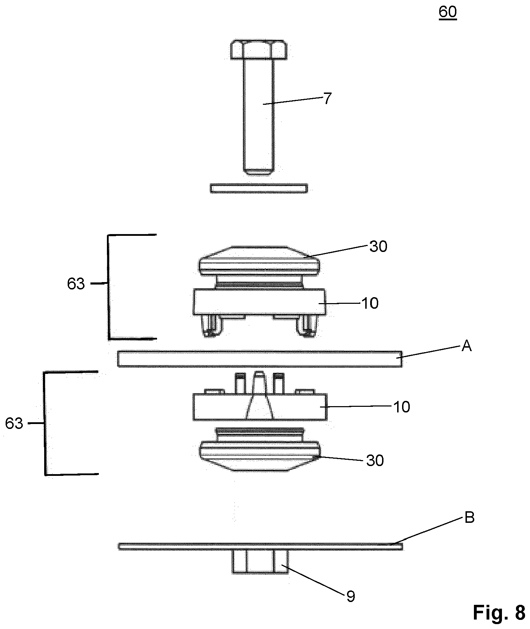

Figur 8 zeigt eine alternative Ausführungsform einer Befestigungsanordnung 60. Die Befestigungsanordnung 60 entspricht im Wesentlichen der oben erläuterten Befestigungsanordnung 1, allerdings ist keine Hülse 50 vorgesehen. Eine ausreichende Stabilität der jeweiligen Befestigungseinheit 63 wird über die Wahl des geeigneten Materials für das Dämpfungselement 30 erzielt. Dazu besteht das Dämpfungselement 30 insbesondere aus einem thermoplastischen Elastomer. Bezüglich der Funktionsweise und des Aufbaus wird auf die Ausführungen zur erfindungsgemäßen Befestigungsanordnung 1 verwiesen.

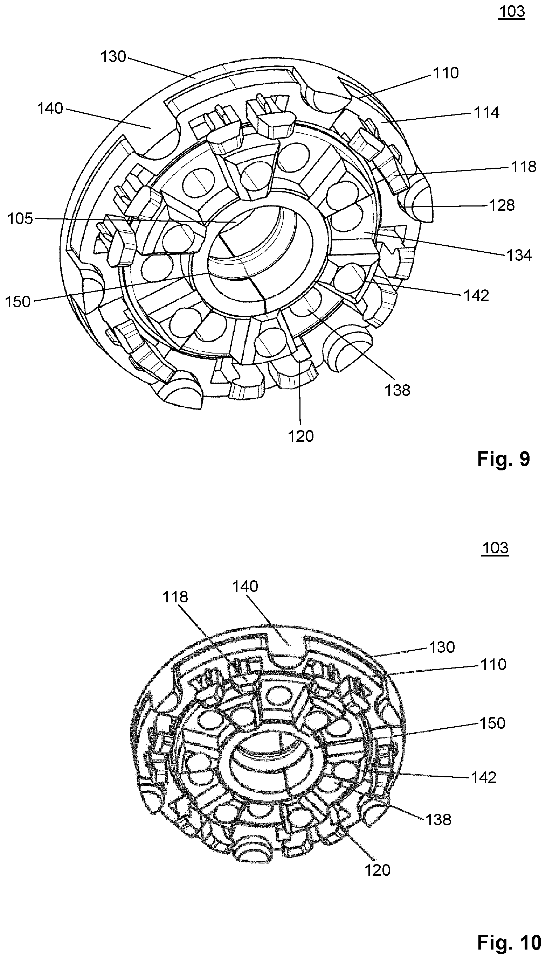

Nun Bezug nehmend auf die Figuren 9 und 10 wird eine alternative zweite Ausführungsform der Befestigungseinheit 103 diskutiert. Dabei werden hauptsächlich die Unterschiede zur ersten Ausführungsform gemäß den Figuren 1 bis 4 erläutert. Im Unterschied zur ersten Ausführungsform stellen in der alternativen zweiten Ausführungsform die Rastnasen 118 des einen Montageelements 110 Rastflächen 120 für das andere Montageelement 110 bereit.

Dazu sind die Rastnasen 118 des Montageelements 110 auf einer gemeinsamen Kreislinie angeordnet. Benachbarte Rastnasen 118 weisen entlang der Kreislinie in entgegengesetzte Richtungen. Mit anderen Worten sind die Rastnasen 118 so angeordnet, dass die Rastvorsprünge nicht radial nach außen oder innen zeigen. Vielmehr bilden zwei Rastnasen 118, die mit dem Rücken, d.h. der dem Rastvorsprung gegenüberliegenden Seite, einander zugewandt sind, ein Paar Rastnasen 118. Im dargestellten Beispiel sind sechs solcher Rastnasenpaare vorhanden, die gleichmäßig voneinander beabstandet sind. Aufgrund dieses Aufbaus bilden die Rastnasen 118 des einen Montageelements 110 zugleich die Rastflächen 120 für die Rastnasen 118 des anderen Montageelements 110. Bezogen auf das Beispiel mit den sechs Rastnasenpaaren müssen die zwei Montageelement 110 um 30° relativ zueinander um die Längsachse der Befestigungsanordnung zur Montage der Montageelemente 110 gedreht sein. Somit steht die Rastnase 118 eines Rastnasenpaares eines Montageelements 110 mit einer Rastnase 118 eines Rastnasenpaares des anderen Montageelements 110 in Eingriff. Die andere Rastnase des Rastnasenpaares 118 des Montageelements 110 steht mit einer Rastnase 118 eines benachbarten Rastnasenpaares des anderen Montageelements 110 in Eingriff. Diese Anordnung stellt eine besonders verlässliche Befestigung der Montageelemente 110 aneinander bereit.

Als Orientierungshilfe beim Zusammenbau zweier baugleicher Befestigungseinheiten 103 zu einer Befestigungsanordnung 101 umfasst jedes Montageelement 110 zwischen jeder Gruppe Rastnasen 118 radial außen eine Aussparung 128, in der ein erster Vorsprung 140 des Dämpfungselements angeordnet ist. Zudem umfasst jedes Dämpfungselement 130 neben den hier kreisförmigen Aussparungen 138 auf der ersten Seite radial innen eine Vielzahl an zweiten Vorsprüngen 142 in Übereinstimmung mit einer Gruppe Rastnasen 118. Dieser Aufbau stellt eine weitere Verdrehsicherung der Befestigungseinheiten 3 zueinander bereit und erleichtert den korrekten Zusammenbau.

Wie ebenfalls erkennbar ist die Hülse 150 mit einer Mehrzahl an Durchbrüchen ausgebildet, durch die sich das Material des Dämpfungselements 130 radial nach innen erstreckt. Somit ist der Innendurchmesser der Befestigungseinheit an dieser Stelle verringert, wodurch eine VerlierSicherung für das Befestigungselement bereitgestellt werden kann..

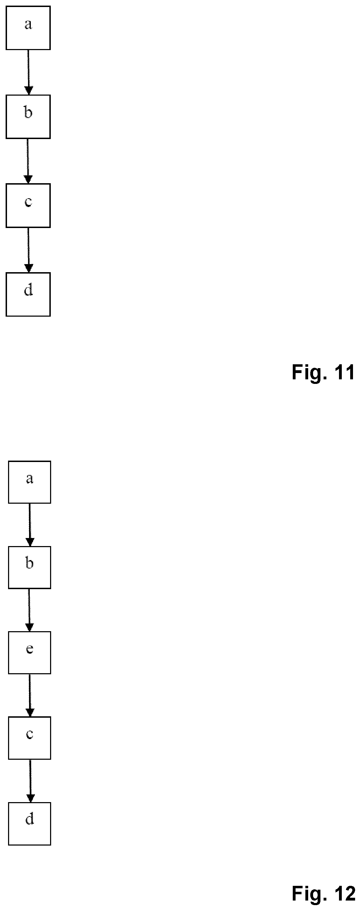

Nun Bezug nehmend auf Figur 11 ist ein schematischer Verfahrensablauf eines Herstellungsverfahrens einer Befestigungsanordnung 60 dargestellt. Hierbei wird in einem ersten Schritt a ein Montageelement 10; 110 und in einem zweiten Schritt b ein Dämpfungselement 30; 130 bereitgestellt. Ein Anordnen des Dämpfungselements 30; 130 zumindest teilweise im Montageelement 10; 110 erfolgt in Schritt c. Diese Schritte können in beliebiger Reihenfolge erfolgen, was nachfolgend erläutert wird.

Das Bereitstellen des Montageelements 10; 110 in Schritt a kann durch Spritzgießen des Montageelements 10; 110 erfolgen. Dies gilt ebenso für das Bereitstellen des Dämpfungselements 30; 130 in Schritt b. Das Dämpfungselement 30; 130 kann alternativ ebenso mittels Vulkanisation hergestellt werden. Grundsätzlich sind unterschiedliche Herstellungsweisen möglich. Einerseits können das Montageelement 10; 110 und das Dämpfungselement 30; 130 getrennt voneinander bereitgestellt und dann in Schritt c ineinander eingesetzt werden.

Alternativ wird zunächst das Montageelement 10; 110 mittels Spritzguss hergestellt. Dann wird das Montageelement 10; 110 in einer weiteren Spritzgussform angeordnet und das Dämpfungselement 30; 130 mittels Spritzguss hergestellt. Auf diese Weise wird das Dämpfungselement 30; 130 direkt an der richtigen Position im Montageelement 10; 110 mittels Spritzgießen hergestellt, so dass das separate Anordnen des Dämpfungselements 30; 130 im Montageelement 10; 110 entfällt. Dies vereinfacht das Herstellungsverfahren weiterhin.

Die obigen Schritte werden in Schritt d wiederholt, um eine weitere baugleiche Befestigungseinheit 63 bereitzustellen. Dies bedeutet, dass die Schritte des Bereitstellens einer Hülse 50; 150, des Bereitstellens eines Montageelements 10; 110, des Bereitstellens eines Dämpfungselements 30; 130 und des Anordnens des Dämpfungselements 30; 130 zumindest teilweise im Montageelement 10; 110 wiederholt werden, um eine weitere baugleiche Befestigungseinheit 63 bereitzustellen. Somit weisen die Montageelemente 10; 110 eine identische Raststruktur auf und zwei baugleiche Befestigungseinheiten 63 der Befestigungsanordnung 60 sind aneinander befestigbar durch einander zugewandtes Anordnen der ersten Seiten 14; 114 der jeweiligen Montageelemente 10; 110 mit einem dazwischen angeordnetem ersten Bauteil A, wie oben erläutert.

Optional und Bezug nehmend auf Figur 12, wird ein Herstellungsverfahren der Befestigungsanordnung 1, d.h. der Befestigungsanordnung mit einer Befestigungseinheit 3; 103 mit Hülse 50; 150, erläutert. Dieses Verfahren unterscheidet sich von dem oben erläuterten Verfahren lediglich darin, dass in einem Schritt e das Bereitstellen der Hülse 50; 150 sowie das Anordnen der Hülse 50; 150 im Dämpfungselement 30; 130 erfolgt. Sofern die Hülse 50; 150 aus einem Thermoplast hergestellt werden soll, kann sie ebenfalls mittels Spritzgießen hergestellt werden. Besonders bevorzugt wird die Hülse 50; 150 separat in das Dämpfungselement 30; 130 eingesetzt oder wird beim Spritzgießen des Dämpfungselements 30; 130 davon umspritzt.

Dies eröffnet eine weitere Verfahrensalternative des Herstellungsverfahrens. So wird beispielsweise zunächst das Montageelement 10; 110 mittels Spritzguss hergestellt. Dann werden das Montageelement 10; 110 und die Hülse 50; 150 in einer weiteren Spritzgussform angeordnet und das Dämpfungselement 30; 130 mittels Spritzguss hergestellt. Auf diese Weise wird das Herstellungsverfahren noch weiter vereinfacht.

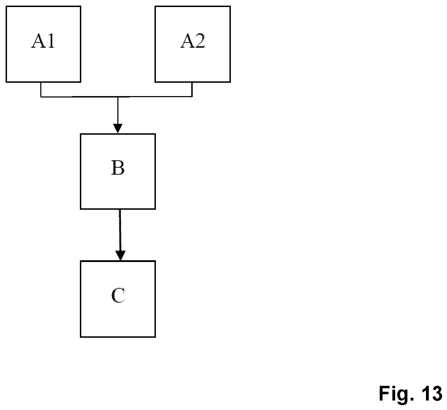

Schließlich und Bezug nehmend auf Figur 13 wird eine Ausführungsform eines Verbindungsverfahrens eines ersten Bauteils A mit einem zweiten Bauteil B erläutert. Hierbei wird in einem ersten Schritt A1 ein erstes Bauteil A mit darin angeordneter Befestigungsanordnung 1 bereitgestellt. In einem alternativen ersten Schritt A2 erfolgt ein Bereitstellen eines ersten Bauteils A und einer Befestigungsanordnung 1 sowie ein Anordnen der Befestigungsanordnung 1 in einer Öffnung des ersten Bauteils A. Im anschließenden zweiten Schritt B wird ein zweites Bauteil B mit einer zweiten Bauteilöffnung in Ausrichtung mit der ersten Bauteilöffnung angeordnet. Schließlich wird das Verbindungselement in Schritt C eingesetzt, so dass das Verbindungselement mit einem Befestigungsbereich 9 im oder benachbart zum zweiten Bauteil B in Eingriff steht.

### 6. Bezugszeichenliste

- 1: Befestigungsanordnung
- 3: Befestigungseinheit
- 5: erste Durchgangsöffnung
- 7: Verbindungsschraube
- 9: Befestigungsbereich für Verbindungsschraube 7

- 10: Montageelement
- 12: zweite Durchgangsöffnung
- 14: erste Seite
- 16: zweite Seite
- 18: Rastnase

- 20: Rastfläche
- 22: Führungssteg
- 24: Aussparung
- 26: Vertiefung

- 30: Dämpfungselement
- 32: dritte Durchgangsöffnung
- 34: erste Seite
- 36: zweite Seite
- 38: Aussparung

- 50: Hülse

- 60: Befestigungsanordnung
- 63: Befestigungseinheit

- 103: Befestigungseinheit
- 105: erste Durchgangsöffnung

- 110: Montageelement
- 114: erste Seite
- 118: Rastnase
- 120: Rastfläche
- 128: Aussparung

- 130: Dämpfungselement
- 134: erste Seite
- 138: Aussparung
- 140: erste Vorsprünge
- 142: zweite Vorsprünge

- 150: Hülse

- A: erstes Bauteil
- B: zweites Bauteil

## Patentansprüche

1. Eine Befestigungsanordnung (1; 60) mit Dämpfungswirkung bestehend aus zwei baugleichen Befestigungseinheiten (3; 63; 103) mit jeweils einer zentralen ersten Durchgangsöffnung (5; 105), **dadurch gekennzeichnet, dass** jede Befestigungseinheit (3; 63; 103) umfasst:
a. ein Montageelement (10; 110) sowie ein Dämpfungselement (30; 130), und
b. das Montageelement (10; 110) ist scheibenförmig mit einer zentralen zweiten Durchgangsöffnung (12) ausgebildet und von einer ersten Seite (14; 114) jedes Montageelements (10; 110) erstreckt sich eine identische Raststruktur,
c. das Dämpfungselement (30; 130) ist scheibenförmig mit einer zentralen dritten Durchgangsöffnung (32) ausgebildet und zumindest teilweise in der zentralen zweiten Durchgangsöffnung (12) des Montageelements (10; 110) angeordnet, so dass
d. die zwei Befestigungseinheiten (3; 63; 103) über die einander zugewandten ersten Seiten (14; 114) mit der identischen Raststruktur der jeweiligen Montageelemente (10; 110) mit dazwischen angeordnetem ersten Bauteil (A) aneinander befestigbar sind.

2. Die Befestigungsanordnung (1; 60) gemäß Patentanspruch 1, deren Raststruktur sich rechtwinklig zu der durch die Scheibenform des Montageelements (10; 110) definierten Anlageebene am ersten Bauteil (A) erstreckt und/oder bei der jede Befestigungseinheit (3; 103) weiterhin eine Hülse (50; 150) umfasst, die in der zentralen dritten Durchgangsöffnung (32) des Dämpfungselements (30; 130) angeordnet ist.

3. Die Befestigungsanordnung (1) gemäß Patentanspruch 2, zweite Alternative, bei der die Hülse (50; 150) mittels Presssitz in der zentralen dritten Durchgangsöffnung (32) des Dämpfungselements (30; 130) angeordnet ist.

4. Die Befestigungsanordnung (1; 60) gemäß einem der vorhergehenden Patentansprüche, wobei
a) jedes Dämpfungselement (30; 130) eine Shore A Härte zwischen 40 und 80 Shore A und/oder eine Mehrzahl an Aussparungen (38; 138) an einer ersten Seite (34; 134) aufweist, wobei die Raststruktur des Montageelements (10; 110) und die Aussparungen (38; 138) des dazugehörigen Dämpfungselements (30; 130) auf der gleichen Seite der jeweiligen Befestigungseinheit (3; 63; 103) bereitgestellt sind, und/oder
b) wobei jedes Montageelement (10; 110) als Raststruktur eine Mehrzahl an Rastnasen (18; 118) aufweist, die im montierten Zustand der Befestigungsanordnung (1; 60) mit einer entsprechenden Mehrzahl an Rastflächen (20; 120) am Montageelement (10; 110) in Eingriff stehen.

5. Die Befestigungsanordnung (1; 60) gemäß einem der vorhergehenden Patentansprüche, wobei die Rastnasen (18) radial nach außen ausgerichtet sind.

6. Die Befestigungsanordnung (1; 60) gemäß Patentanspruch 5, wobei
a) jedes Montageelement (10) zwei Führungsstege (22) und zwei Aussparungen (24) auf der radialen Innenseite aufweist, die jeweils radial einander gegenüber liegend und im Wechsel angeordnet sind, und/oder
b) jedes Montageelement (10) radial außen zwei Vertiefungen (26) aufweist, und/oder
c) die Montageelemente (10) jeder Befestigungseinheit (3; 63) zur Befestigung aneinander um 90° zueinander um die Längsachse gedreht sind.

7. Die Befestigungsanordnung (1; 60) gemäß einem der Patentansprüche 1 bis 4, wobei die Rastnasen (118) jedes Montageelements (110) auf einer gemeinsamen Kreislinie ausgerichtet sind und benachbarte Rastnasen (118) entlang der Kreislinie in entgegengesetzte Richtungen weisen.

8. Die Befestigungsanordnung (1; 60) gemäß Patentanspruch 7, wobei
a) jedes Montageelement (110) zwischen jeder Gruppe Rastnasen (118) radial außen eine Aussparung (128) umfasst, in der ein entsprechender erster Vorsprung (140) des Dämpfungselements (130) angeordnet ist, und/oder
b) jedes Dämpfungselement (130) auf der ersten Seite (134) radial innen eine Vielzahl an zweiten Vorsprüngen (142) in Übereinstimmung mit einem Paar Rastnasen (118) aufweist und/oder
c) die Hülse (150) jeder Befestigungseinheit (103) zweiteilig oder mit einer Mehrzahl an Durchbrüchen ausgebildet ist und/oder
d) die Montageelemente (110) jeder Befestigungseinheit (103) zur Befestigung aneinander um 30° zueinander um die Längsachse gedreht sind.

9. Eine Befestigungseinheit (3; 63; 103) für eine Befestigungsanordnung (1; 60) gemäß Patentanspruch 1 mit jeweils einer zentralen ersten Durchgangsöffnung (5; 105), umfassend:
a. ein Montageelement (10; 110) sowie ein Dämpfungselement (30; 130), und
b. das Montageelement (10; 110) ist scheibenförmig mit einer zentralen zweiten Durchgangsöffnung (12) ausgebildet und von einer ersten Seite (14; 114) des Montageelements (10; 110) erstreckt sich eine Raststruktur, wobei
c. das Dämpfungselement (30; 130) scheibenförmig mit einer zentralen dritten Durchgangsöffnung (32) ausgebildet und zumindest teilweise in der zentralen zweiten Durchgangsöffnung (12) des Montageelements (10; 110) angeordnet ist.

10. Eine Befestigungseinheit (3; 103) gemäß Patentanspruch 9, weiterhin umfassend eine Hülse (50; 150), die in der zentralen dritten Durchgangsöffnung (32) des Dämpfungselements (30; 130) angeordnet ist.

11. Ein erstes Bauteil (A) mit einer in einer Bauteilöffnung des ersten Bauteils (A) angeordneten Befestigungsanordnung (1; 60) gemäß einem der vorhergehenden Patentansprüche 1 bis 8.

12. Eine Bauteilverbindung, umfassend ein erstes Bauteil (A) gemäß Patentanspruch 11 sowie ein zweites Bauteil (B) mit einer zweiten Öffnung und ein Verbindungselement, wobei das Verbindungselement sich durch die Befestigungsanordnung (1) erstreckt und mit einem passenden Befestigungsbereich im oder benachbart zum zweiten Bauteil (B) in Eingriff steht.

13. Die Bauteilverbindung gemäß Patentanspruch 12, wobei ein radialer Toleranzausgleich dadurch realisierbar ist, dass jedes Dämpfungselement (30; 130), vorzugsweise jede Hülse (50; 150), einen Innendurchmesser aufweist, der größer ist als der Außendurchmesser des Verbindungselements.

14. Ein Herstellungsverfahren einer Befestigungsanordnung (1; 60) gemäß einem der vorhergehenden Patentansprüche 1 bis 8 mit den Schritten:
a. Bereitstellen eines Montageelements (10; 110) (Schritt a),
b. Bereitstellen eines Dämpfungselements (30; 130) (Schritt b),
c. Anordnen des Dämpfungselements (30; 130) zumindest teilweise im Montageelement (10; 110) (Schritt c),
d. Wiederholen der obigen Schritte a. bis c. (Schritt d), um eine weitere baugleiche Befestigungseinheit (3; 63; 103) bereitzustellen, deren Montageelement (10; 110) eine identische Raststruktur aufweist, so dass zwei baugleiche Befestigungseinheiten (3; 63; 103) der Befestigungsanordnung (1) aneinander befestigbar sind durch einander zugewandtes Anordnen der ersten Seiten (14; 114) der jeweiligen Montageelemente (10; 110) mit einem dazwischen angeordnetem ersten Bauteil (A).

15. Das Herstellungsverfahren gemäß Patentanspruch 14, mit dem weiteren Schritt:
e. Bereitstellen einer Hülse (50; 150) und Anordnen der Hülse (50; 150) im Dämpfungselement (30; 130) (Schritt e).

16. Das Herstellungsverfahren gemäß Patentanspruch 15, bei dem
a) die Hülse (50; 150) aus einem Metall oder einem Thermoplast besteht und/oder das Montageelement (10; 110) aus einem technischen Thermoplast und/oder
b) die Hülse (50; 150) aus einem elektrisch leitenden Material ausgebildet ist, insbesondere aus einem elektrisch leitenden Thermoplast mit oder ohne Faserverstärkung.

17. Das Herstellungsverfahren gemäß einem der Patentansprüche 14 bis 16, wobei
f. das Bereitstellen des Montageelements (10; 110) durch Spritzgießen des Montageelements (10; 110) erfolgt und/oder
g. das Bereitstellen des Dämpfungselements (30; 130) erfolgt durch Anordnen der Hülse (50; 150) im Montageelement (10; 110) und Spritzgießen des Dämpfungselements (30; 130) aus einem Material mit einer Shore A Härte zwischen 40 und 80 Shore A.

18. Ein Verbindungsverfahren eines ersten Bauteils (A) mit einem zweiten Bauteil (B), umfassend die Schritte:
al. Bereitstellen eines ersten Bauteils (A) mit darin angeordneter Befestigungsanordnung (1; 60), insbesondere eines ersten Bauteils gemäß Patentanspruch 11, (Schritt A1) oder
a2. Bereitstellen eines ersten Bauteils (A) und einer Befestigungsanordnung (1; 60) gemäß einem der Patentansprüche 1 bis 8 sowie Anordnen der Befestigungsanordnung (1; 60) in einer Öffnung des ersten Bauteils (A) (Schritt A2), danach
b. Anordnen eines zweiten Bauteils (B) mit einer zweiten Bauteilöffnung in Ausrichtung mit der ersten Bauteilöffnung (Schritt B) und
c. Einsetzen des Verbindungselements, so dass das Verbindungselement mit einem passenden Befestigungsbereich im oder benachbart zum zweiten Bauteil in Eingriff steht (Schritt C).

## Claims

1. A fastening arrangement (1; 60) with damping effect consisting of two identically constructed fastening units (3; 63; 103) with a central first thru-opening (5; 105) each, **characterized in that** each fastening unit (3; 63; 103) includes:
a. an assembly element (10; 110) as well as a damping element (30; 130), and
b. the assembly element (10; 110) is formed disk-like with a central second thru-opening (12) and an identical latching structure extends from a first side (14; 114) of each assembly element (10; 110),
c. the damping element (30; 130) is formed disk-like with a central third thru-opening (32) and is arranged at least partly in the central second thru-opening (12) of the assembly element (10; 110), so that
d. the two fastening units (3; 63; 103) are fastenable to each other via the first sides (14; 114) which are facing each other, with the identical latching structure of the respective assembly elements (10; 110) with a first component (A) being interposed.

2. The fastening arrangement (1; 60) according to claim 1, the latching structure of which extends rectangularly with respect to the abutment surface, that is defined by the disc form of the assembly element (10; 110), at the first component (A) and/or in which each fastening unit (3; 103) furthermore includes a sleeve (50; 150) which is arranged in the central third thru-opening (32) of the damping element (30; 130).

3. The fastening arrangement (1) according to claim 2, second alternative, in which the sleeve (50; 150) is arranged by means of a press-fit in the central third thru-opening (32) of the damping element (30; 130).

4. The fastening arrangement (1; 60) according to one of the preceding claims,
a) wherein each damping element (30; 130) has a shore A hardness between 40 and 80 shore A and/or a plurality of recesses (38; 138) on a first side (34; 134), wherein the latching structure of the assembly element (10; 110) and the recesses (38; 138) of the associated damping element (30; 130) are provided on the same side of the respective fastening unit (3; 63; 103) and/or
b) wherein each assembly element (10; 110) includes a plurality of latching noses (18; 118) as latching structure, which engage with a corresponding plurality of latching surfaces (20; 120) at the assembly element (10; 110) in the assembled state of the fastening arrangement (1; 60).

5. The fastening arrangement (1; 60) according to one of the preceding claims, wherein the latching noses (18) are oriented to the radial outside.

6. The fastening arrangement (1; 60) according to claim 5, wherein
a) each assembly element (10) includes two guiding webs (22) and two recesses (24) on the radial inside, each being arranged radially opposite to one another and in alternation, and/or
b) each assembly element (10) includes two depressions (26) on the radial outside, and/or
c) the assembly elements (10) of each fastening unit (3; 63) are rotated relative to each other by 90° around the longitudinal axis for the purpose of being fastened at each other.

7. The fastening arrangement (1; 60) according to one of the claims 1 to 4, wherein the latching noses (118) of each assembly element (110) are aligned on a joint circle line and adjacent latching noses (118) show in opposite directions along the circle line.

8. The fastening arrangement (1; 60) according to claim 7, wherein
a) each assembly element (110) includes a recess (128) between each group of latching noses (118) at the radial outside, in which a corresponding first projection (140) of the damping element (130) is arranged, and/or
b) each damping element (130) includes a plurality of second projections (142) in accordance with a pair of latching noses (118) on the first side (134) radially inside, and/or
c) the sleeve (150) of each fastening unit (103) is configured two-part or with a plurality of breakthroughs and/or
d) the assembly elements (110) of each fastening unit (103) are rotated with respect to each other by 30° around the longitudinal axis for the purpose of being fastened at each other.

9. A fastening unit (3; 63; 103) for a fastening arrangement (1; 60) according to claim 1 with a central first thru-opening (5; 105) each, including:
a. an assembly element (10; 110) as well as a damping element (30; 130), and
b. the assembly element (10; 110) is formed disc-like with a central second thru-opening (12) and a latching structure extends from a first side (14; 114) of the assembly element (10; 110), wherein
c. the damping element (30; 130) is formed disc-like with a central third thru-opening (32) and is arranged at least partly in the central second thru-opening (12) of the assembly element (10; 110).

10. A fastening unit (3; 103) according to claim 9, further including a sleeve (50; 150) which is arranged in the central third thru-opening (32) of the damping element (30; 130).

11. A first component (A) with a fastening arrangement (1; 60) according to one of the preceding claims 1 to 8 that is arranged in a component opening of the first component (A).

12. A component connection including a first component (A) according to claim 11 as well as a second component (B) with a second opening and a connecting element, wherein the connecting element extends through the fastening arrangement (1) and engages with a suitable fastening portion in or adjacent to the second component (B).

13. The component connection according to claim 12, wherein a radial tolerance compensation is implementable in that each damping element (30; 130), preferably each sleeve (50; 150), has an inner diameter that is larger than the outer diameter of the connecting element.

14. A production method of a fastening arrangement (1; 60) according to one of the preceding claims 1 to 8 with the steps:
a. providing an assembly element (10; 110) (step a),
b. providing a damping element (30; 130) (step b)
c. arranging the damping element (30; 130) at least partly in the assembly element (10; 110) (step c),
d. repeating the above steps a. to c. (step d) in order to provide a further identically constructed fastening unit (3; 63; 103), the assembly element (10; 110) of which has an identical latching structure, so that two identically constructed fastening units (3; 63; 103) of the fastening arrangement (1) are fastenable at each other by arranging the first sides (4; 114) of the respective assembly elements (10; 110) in a way that they face one another, with a first component (A) arranged between them.

15. The production method according to claim 14, with the further step:
e. providing a sleeve (50; 150) and arranging the sleeve (50; 150) in the damping element (30; 130) (step e).

16. The production method according to claim 15, in which
a) the sleeve (50; 150) is made of a metal or a thermoplastic and/or the assembly element (10; 110) of a technical thermoplastic and/or
b) the sleeve (50; 150) is made of an electrically conductive material, in particular of an electrically conductive thermoplastic with or without fiber reinforcement.

17. The production method according to one of the claims 14 to 16, wherein
f. the providing of the assembly element (10; 110) takes place by injection molding the assembly element (10; 110) and/or
g. the providing of the damping element (30; 130) takes place by arranging the sleeve (50; 150) in the assembly element (10; 110) and injection-molding the damping element (30; 130) out of a material with a shore A hardness between 40 and 80 shore A.

18. A connecting method of a first component (A) with a second component (B) including the steps:
a1. providing a first component (A) with fastening arrangement (1; 60) arranged in there, in particular a first component according to claim 11, (step A1) or
a2. providing a first component (A) and a fastening arrangement (1; 60) according to one of the claims 1 to 8 as well as arranging the fastening arrangement (1; 60) in an opening of the first component (A) (step A2), subsequently
b. arranging a second component (B) with a second component opening in alignment with the first component opening (step B) and
c. inserting the connecting element, so that the connecting element engages with a matching fastening portion in or adjacent to the second component (step C).

## Revendications

1. Ensemble de fixation (1 ; 60) ayant une action d'amortissement, constitué de deux unités de fixation (3 ; 63 ; 103) de construction identique, comprenant respectivement une première ouverture de passage centrale (5 ; 105), **caractérisé en ce que** chaque unité de fixation (3 ; 63 ; 103) comporte :
a. un élément de montage (10 ; 110) ainsi qu'un élément d'amortissement (30 ; 130), et
b. l'élément de montage (10 ; 110) est conçu en forme de disque avec une deuxième ouverture de passage centrale (12) et une structure d'encliquetage identique s'étend à partir d'un premier côté (14 ; 114) de chaque élément de montage (10 ; 110),
c. l'élément d'amortissement (30 ; 130) est conçu en forme de disque avec une troisième ouverture de passage centrale (32) et disposé au moins partiellement dans la deuxième ouverture de passage centrale (12) de l'élément de montage (10 ; 110), de sorte que
d. les deux unités de fixation (3 ; 63 ; 103) peuvent être fixées les unes aux autres par les premiers côtés (14; 114) tournés l'un vers l'autre avec la structure d'encliquetage identique des éléments de montage (10 ; 110) respectifs, avec un premier composant (A) disposé entre celles-ci.

2. Ensemble de fixation (1 ; 60) selon la revendication 1, dont la structure d'encliquetage s'étend en angle droit par rapport au plan d'appui sur le premier composant (A), lequel est défini par la forme en disque de l'élément de montage (10 ; 110), et/ou dans lequel chaque unité de fixation (3 ; 103) comporte en outre un manchon (50 ; 150) disposé dans la troisième ouverture de passage centrale (32) de l'élément d'amortissement (30 ; 130).

3. Ensemble de fixation (1) selon la revendication 2, deuxième alternative, dans lequel le manchon (50 ; 150) est disposé par ajustement serré dans la troisième ouverture de passage centrale (32) de l'élément d'amortissement (30 ; 130).

4. Ensemble de fixation (1 ; 60) selon l'une des revendications précédentes, dans lequel
a) chaque élément d'amortissement (30 ; 130) présente une dureté Shore A entre 40 et 80 Shore A et/ou une pluralité d'évidements (38 ; 138) sur un premier côté (34 ; 134), dans lequel la structure d'encliquetage de l'élément de montage (10 ; 110) et les évidements (38 ; 138) de l'élément d'amortissement (30 ; 130) associé sont prévus sur le même côté de l'unité de fixation (3 ; 63 ; 103) respective, et/ou
b) dans lequel chaque élément de montage (10 ; 110) présente une pluralité d'ergots d'encliquetage (18 ; 118) en tant que structure d'encliquetage, lesquels sont en prise avec une pluralité correspondante de surfaces d'encliquetage (20 ; 120) sur l'élément de montage (10 ; 110) à l'état monté de l'ensemble de fixation (1 ; 60).

5. Ensemble de fixation (1 ; 60) selon l'une des revendications précédentes, dans lequel les ergots d'encliquetage (18) sont orientés radialement vers l'extérieur.

6. Ensemble de fixation (1 ; 60) selon la revendication 5, dans lequel
a) chaque élément de montage (10) présente deux âmes de guidage (22) et deux évidements (24) sur le côté intérieur radial, lesquels sont disposés en alternance et respectivement de façon radialement opposée les uns par rapport aux autres, et/ou
b) chaque élément de montage (10) présente deux renfoncements (26) radialement à l'extérieur, et/ou
c) les éléments de montage (10) de chaque unité de fixation (3 ; 63) sont tournés de 90° autour de l'axe longitudinal les uns par rapport aux autres pour être fixés les uns aux autres.

7. Ensemble de fixation (1 ; 60) selon l'une des revendications 1 à 4, dans lequel les ergots d'encliquetage (118) de chaque élément de montage (110) sont alignés sur une ligne circulaire commune et des ergots d'encliquetage (118) adjacents sont orientés dans des directions opposées le long de la ligne circulaire.

8. Ensemble de fixation (1 ; 60) selon la revendication 7, dans lequel
a) chaque élément de montage (110) comporte un évidement (128) radialement à l'extérieur entre chaque groupe d'ergots d'encliquetage (118), dans lequel est disposée une première saillie (140) correspondante de l'élément d'amortissement (130), et/ou
b) chaque élément d'amortissement (130) présente une multitude de deuxièmes saillies (142) radialement à l'intérieur sur le premier côté (134), en concordance avec une paire d'ergots d'encliquetage (118) et/ou
c) le manchon (150) de chaque unité de fixation (103) est conçu en deux parties ou avec une pluralité de percées et/ou
d) les éléments de montage (110) de chaque unité de fixation (103) sont tournés de 30° autour de l'axe longitudinal les uns par rapport aux autres pour être fixés les uns aux autres.

9. Unité de fixation (3 ; 63 ; 103) pour un ensemble de fixation (1 ; 60) selon la revendication 1, respectivement dotée d'une première ouverture de passage centrale (5 ; 105), comportant :
a. un élément de montage (10 ; 110) ainsi qu'un élément d'amortissement (30 ; 130), et
b. l'élément de montage (10 ; 110) est conçu en forme de disque avec une deuxième ouverture de passage centrale (12) et une structure d'encliquetage s'étend à partir d'un premier côté (14 ; 114) de chaque élément de montage (10 ; 110), dans lequel
c. l'élément d'amortissement (30 ; 130) est conçu en forme de disque avec une troisième ouverture de passage centrale (32) et disposé au moins partiellement dans la deuxième ouverture de passage centrale (12) de l'élément de montage (10 ; 110).

10. Unité de fixation (3 ; 103) selon la revendication 9, comportant en outre un manchon (50 ; 150) disposé dans la troisième ouverture de passage centrale (32) de l'élément d'amortissement (30 ; 130).

11. Premier composant (A) avec un ensemble de fixation (1 ; 60) selon l'une des revendications précédentes 1 à 8, lequel est disposé dans une ouverture de composant du premier composant (A).

12. Raccordement de composants, comportant un premier composant (A) selon la revendication 11 ainsi qu'un deuxième composant (B) présentant une deuxième ouverture et un élément de raccordement, dans lequel l'élément de raccordement s'étend à travers l'ensemble de fixation (1) et vient en prise avec une région de fixation correspondante dans le deuxième composant (B) ou adjacente à celui-ci.

13. Raccordement de composants selon la revendication 12, dans lequel une compensation de tolérance radiale peut être réalisée du fait que chaque élément d'amortissement (30 ; 130), de préférence chaque manchon (50 ; 150), présente un diamètre intérieur supérieur au diamètre extérieur de l'élément de raccordement.

14. Procédé de fabrication d'un ensemble de fixation (1 ; 60) selon l'une des revendications 1 à 8, comprenant les étapes suivantes :
a. mise à disposition d'un élément de montage (10 ; 110) (étape a),
b. mise à disposition d'un élément d'amortissement (30 ; 130) (étape b),
c. agencement de l'élément d'amortissement (30 ; 130) au moins partiellement dans l'élément de montage (10 ; 110) (étape c),
d. répétition des étapes a. à c. ci-dessus (étape d), de manière à fournir une unité de fixation (3 ; 63 ; 103) supplémentaire de construction identique, dont l'élément de montage (10 ; 110) présente une structure d'encliquetage identique, de sorte que deux unités de fixation (3 ; 63 ; 103) de construction identique de l'ensemble de fixation (1) peuvent être fixées l'une à l'autre par un agencement en face-à-face des premiers côtés (14 ; 114) de l'élément de montage (10 ; 110) respectif avec un premier composant (A) disposé entre ceux-ci.

15. Procédé de fabrication selon la revendication 14, comprenant l'étape supplémentaire suivante :
e. mise à disposition d'un manchon (50 ; 150) et agencement du manchon (50 ; 150) dans l'élément d'amortissement (30 ; 130) (étape e).

16. Procédé de fabrication selon la revendication 15, dans lequel
a) le manchon (50 ; 150) est constitué d'un métal ou d'une matière thermoplastique et/ou l'élément de montage (10 ; 110) est conçu à partir d'une matière thermoplastique technique et/ou
b) le manchon (50 ; 150) est conçu à partir d'un matériau électriquement conducteur, en particulier à partir d'une matière thermoplastique électriquement conductrice avec ou sans renfort fibreux.

17. Procédé de fabrication selon l'une des revendications 14 à 16, dans lequel
f. la mise à disposition de l'élément de montage (10 ; 110) est réalisée par moulage par injection de l'élément de montage (10 ; 110) et/ou
g. la mise à disposition de l'élément d'amortissement (30 ; 130) est réalisée par agencement du manchon (50 ; 150) dans l'élément de montage (10 ; 110) et par moulage par injection de l'élément d'amortissement (30 ; 130) à partir d'un matériau présentant une dureté de Shore A entre 40 et 80 Shore A.

18. Procédé de raccordement d'un premier composant (A) avec un deuxième composant (B), comportant les étapes suivantes :
a1. mise à disposition d'un premier composant (A) avec un ensemble de fixation (1 ; 60) disposé dans celui-ci, en particulier d'un premier composant selon la revendication 11, (étape A1) ou
a2. mise à disposition d'un premier composant (A) et d'un ensemble de fixation (1 ; 60) selon l'une des revendications 1 à 8 et agencement de l'ensemble de fixation (1 ; 60) dans une ouverture du premier composant (A) (étape A2), puis
a3. agencement du deuxième composant (B) avec une deuxième ouverture de composant en alignement avec la première ouverture de composant (étape B) et
a4. insertion de l'élément de raccordement, de sorte que l'élément de raccordement vient en prise avec une région de fixation correspondante dans le deuxième composant ou adjacente à celui-ci (étape C).
